# EUROPEAN PATENT SPECIFICATION

(11) **EP 3 583 686 B1**
(45) Date of publication and mention of the grant of the patent: **10.03.2021**
(21) Application number: 18706566.9
(22) Date of filing: 16.02.2018
(51) Int. Cl.: H02K 21/16, H02K 7/08, H02K 19/10

(54) **ELECTRIC MOTOR**
ELEKTROMOTOR
MOTEUR ÉLECTRIQUE

(30) Priority: 17.02.2017 RU 2017105283
(43) Date of publication of application: 25.12.2019
(73) Proprietor: Arrival Limited, Banbury, Oxfordshire OX16 2SN (GB)
(72) Inventor: BIKMUKHAMETOV, Alexey, Saint-Petersburg 197229 (RU)
(74) Representative: Jarrett, Daniel Phillip
(86) International application number: PCT/GB2018/050417
(87) International publication number: WO 2018/150192

(56) References cited:
- EP-A1- 2 532 892
- EP-A1- 3 054 562
- EP-A2- 2 418 761
- WO-A1-2004/068678
- CN-B- 106 849 408
- JP-A- 2005 086 860
- RU-C1- 2 007 820
- SU-A1- 1 479 184
- US-A1- 2009 251 013
- US-A1- 2010 301 712

## Description

### Field

This specification relates to electric motors.

### Background

Conventional electric motors have an air gap between a stator and a rotor such that the rotor can rotate freely under the attractive force of the magnetic field generated from the stator. The magnitude of the magnetic field, and therefore the attractive force between the poles of the rotor and the stator, depends strongly on the size of the air gap. This is because magnetic flux has to overcome the discontinuity of magnetic permeability in the air gap, through which the magnetic field lines may not close. A larger air gap adversely affects performance characteristics such as power factor and idle current.

For this reason, a small air gap size is preferred. However, the air gap cannot be too small because, under such conditions, the rotor can jam. For example, jamming of the rotor may occur due to thermal expansion of the rotor and/or the stator, or may be caused by static and/or dynamic eccentricity of the rotor.

To ensure a stable operation while maintaining a smallest possible gap size, conventional electric motors have adopted various mechanical measures such as shaft support bearings. However, such measures are inevitably accompanied by various restrictions on the design of the electric motor, especially in terms of total volume occupied by the electric motor

Documents EP3054562 A1, EP 2 532 892 A1, US 2010/301712 A1 and JP 2005 086860 disclose electrical machines having rolling elements in the airgap.

### Summary of invention

An invention is set out in the claims.

### Summary of specification

This specification provides an electric motor, comprising a rotor, a stator, a gap between the rotor and the stator, and a first group of rollable elements located in the gap comprising a magnetic material.

The stator of the electric motor may further comprise a housing and a plurality of electromagnets, and the housing may comprise a magnetic material and a cylindrical internal surface. The rotor may comprise a plurality of poles and an external surface formed as the curved surface of a circular cylinder. The rotor may be disposed inside the cylindrical internal surface of the stator such that central axes of the cylindrical internal surface and the external surface of the rotor maybe parallel and coaxial, and such that the gap is formed between the external surface of the rotor and the cylindrical internal surface of the stator.

The first group of rollable elements of the electric motor may be disposed in the gap and arranged to be in mechanical contact with both the external surface of the rotor and the cylindrical internal surface of the stator.

The stator of the electric motor may further comprise a housing and a plurality of electromagnets. The housing may comprise a magnetic material and a cylindrical external surface. The rotor may comprise a plurality of poles and an internal surface formed as the curved surface of a circular cylinder. The rotor may be disposed outside the cylindrical external surface of the stator such that central axes of the cylindrical internal surface and the external surface of the stator maybe parallel and coaxial, and such that the gap is formed between the internal surface of the rotor and the cylindrical external surface of the stator.

The first group of rollable elements of the electric motor may be disposed in the gap and arranged to be in mechanical contact with both the internal surface of the rotor and the cylindrical external surface of the stator.

The rotor and the first group of rollable elements of the electric motor may be configured to rotate in response to magnetic fields generated by one or more of the electromagnets.

Magnetic field lines of the electric motor may be closed from the one of the electromagnets to the one of the plurality of poles via at least one of the respective ones of the first group of rollable elements when at least one of the electromagnets is powered and aligned with one of the plurality of poles of the rotor.

The gap of the electric motor may be arranged such that the first group of rollable elements form a single row around the circumference of the gap.

The electric motor may further comprise a plurality of spacers comprising a non-magnetic material. Respective ones of the plurality of spacers may be disposed between respective groups comprising a predetermined number of respective ones of the first group of rollable elements.

The plurality of groups of the electric motor, comprising a predetermined number of the respective ones of the first group of the rollable elements may be disposed within the gap at regular intervals such that there maybe empty space in the gap between each of the groups.

The electric motor may further comprise a second group of the rollable elements comprising a non-magnetic material.

One or more groups of the electric motor, comprising a first number of the respective ones of the first group of the rollable elements may be disposed in the gap to alternate with one or more groups comprising a second number of the respective ones of the second group of the rollable elements.

Advantageously, the rotor, stator and the rollable elements, of the first group, second group, or both groups, are configured such that the mechanical contact of the rollable elements with both the surface of the rotor and the surface of the stator may ensure the relative spacing and positioning of the rollable elements from each other does not change during rotation of the rotor. That is, in advantageous embodiments, the friction between the rollable elements and both the surface of the rotor and the surface of the stator, and the force on the rollable elements from compressive contact with both the surface of the rotor and the surface of the stator, is such that the spacing between the rollable elements does not change during rotation of the rotor. This may be the case in both embodiments where the rotor is external to the stator, and where the rotor is internal of the stator.

The plurality of poles of the electric motor may comprise one or more magnetic materials disposed periodically around the external surface and arranged to protrude radially outward.

The plurality of poles of the electric motor may comprise permanent magnets such that the polarity of respective ones of the plurality of poles may be opposite to that of the neighbouring pole.

The rotor of the electric motor may further comprise a plurality of filling portions, the plurality of filling portions comprising non-magnetic materials and disposed between the plurality of poles of the rotor such that the external surface of the rotor is in a cylindrical shape.

The rotor of the electric motor may be in annular shape such that the internal surface of the rotor is in a cylindrical shape disposed concentrically with the external surface of the rotor.

The plurality of rollable elements of the electric motor may comprise one or more of ball bearings, roller bearings, and conical rollers.

Permeability values of the housing of the stator, the first group of rollable elements, and the poles of the rotor may be substantially similar.

The permeability value of the first group of rollable elements may be larger than that of the housing of the stator.

Permeability value of the first group of rollable elements of the electric motor may be larger than those of the poles of the rotor and the housing of the stator.

The first group of rollable elements of the electric motor may be arranged in the gap such that when the rotor is rotated by one motor step angle, the arrangement of the first group of rollable elements with respect to the rotor and the stator may be the same as the arrangement before the rotation of the rotor.

The first group of rollable elements of the electric motor may be arranged in the gap such that when the rotor is rotated by one motor step angle, the arrangement of the first group of rollable elements with respect to the rotor and the stator may be different from the arrangement before the rotation of the rotor.

The electric motor may further comprise a shaft on which the rotor is mounted and one or more of shaft support bearings configured to support the shaft.

### Brief Description of the Drawings

Embodiments will now be described, by way of example only, with reference to the accompanying drawings, in which:
Fig. 1a shows a schematic cross-sectional view of an electric motor of a first embodiment;
Fig. 1b shows a schematic cross-sectional view of a stator of the electric motor of Fig. 1a;
Fig. 1c shows an enlarged schematic partial cross-sectional view of an alternative configuration of the electric motor of Fig. 1a;
Fig. id shows an enlarged schematic partial cross-sectional view of another alternative configuration of the electric motor of Fig. 1a;
Fig. 2 shows a schematic cross-sectional view of an electric motor of a second embodiment;
Fig. 3 shows a schematic cross-sectional view of an electric motor of an example which does not correspond to the invention.
Fig. 4 shows a schematic cross-sectional view of an electric motor of a fourth embodiment;
Fig. 5 shows a schematic cross-sectional view of an electric motor of a fifth embodiment;
Fig. 6 shows a schematic cross-sectional view of an electric motor of a sixth embodiment;
Fig. 7 shows a schematic cross-sectional view of an electric motor of a seventh embodiment;
Fig. 8 shows a schematic cross-sectional view of an electric motor of an eighth embodiment;
Fig. 9 shows a schematic cross-sectional view of an electric motor of a ninth embodiment;
Fig. 10 shows a schematic cross-sectional view of an electric motor of a tenth embodiment;
Fig. 11 shows a schematic cross-sectional view of an alternative configuration of rotor;
Fig. 12a shows a schematic cross-sectional view of an electric motor of an eleventh embodiment;
Fig. 12b shows a schematic cross-sectional view of a rotor of the motor of Fig. 12a;
Fig. 13a shows a schematic cross-sectional view of an electric motor of a twelfth embodiment; and
Fig. 13b shows a schematic cross-sectional view of a rotor of the motor of Fig. 13a.

### Detailed Description

The following disclosure relates to an electric motor in which an air gap between a rotor and a stator is at least partially occupied by a plurality of rollable elements. As will be explained below, the plurality of rollable elements may comprise magnetic material. The plurality of rollable elements may comprise two groups of rollable elements. The first such group may include a plurality of rollable elements comprising magnetic material, whereas the second group may include a plurality of rollable elements which comprise non-magnetic material. The physical and electromagnetic interactions between the plurality of rollable elements, the rotor and the stator contribute to a high energy efficiency in the electric motor. The arrangement of the motor may also be suitable for operation over a very wide range of temperatures, including high temperatures.

In the examples of the electric motor described below, the air gap between the rotor and the stator is at least partially filled with rollable elements, such as cylindrical rollers or ball bearings, composed of a material with a magnetic permeability that are chosen to be large enough considering the magnetic permeabilities of the rotor poles and the external parts of the stator. An effect of this is that the magnetic force between the poles of the rotor and the stator can be maximised. This is because the magnetic field lines can be closed across the rotor and the stator via the rollable elements of magnetic material, such as the cylindrical rollers or ball bearings referred to above. The presence of the rollable elements of magnetic material, in effect, drastically reduces the air gap between the rotor and the stator. This can be advantageous in terms of lowering the electrical current requirement of the motor during operation, thereby improving the power factor of the electric motor.

Furthermore, the inclusion of rollable elements, such as rollers or bearings, in the air gap between the rotor and the stator helps to prevent jamming of the rotor due to factors such as thermal expansion of the rotor and/or stator, or static and dynamic eccentricity of the rotor. This is particularly advantageous for high temperature operation of the motor, where thermal expansion can be more significant.

The inclusion of the rollable elements, and their physical interaction with the rotor and stator, may also remove any necessity for the types of supporting elements used in some conventional electric motors, such as shaft support bearings. Therefore, the inclusion of the rollable elements means that a more compact design of electric motor is possible. For example, a hollow rotor can be used because a rotor-support shaft is not necessary. The benefits of the electric motor in terms of compactness maybe particularly sought after in the automotive industry, where the electric motor may be used with a gearbox in a relatively confined space.

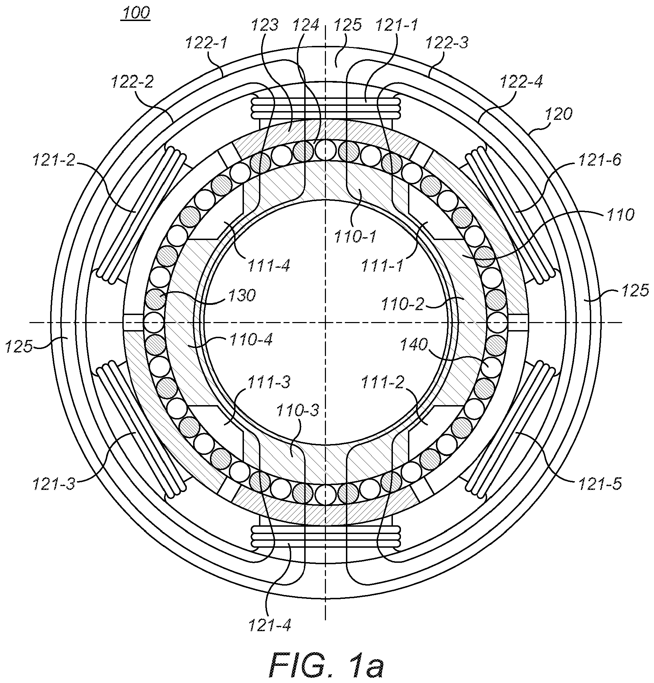

Figure 1a shows a schematic cross sectional view of a first embodiment of an electric motor 100. The electric motor 100 comprises a rotor 110 and a stator 120.

The rotor 110 comprises a first region 1101 and a second region 1102. The first region 1101 of the rotor 110 comprises at least one magnetic material, whereas the second region 1102 of the rotor 110 comprises non-magnetic material. As discussed below, the second region 1102 of rotor 110 may in fact be substantially absent of magnetic materials.

The first region 1101 of the rotor 110 comprises a plurality of poles 110-1, 110-2, 110-3, 110-4. The second region 1102 of the rotor 110 may comprise a plurality of non-magnetic portions 111-1, 111-2, 111-3, 111-4, which may be located between the plurality of poles 110-1 - 110-4 in the first region 1101. These non-magnetic portions 111-1 - 111-4 of the second region of the rotor 110 are referred to below as filling portions 111-1 - 111-4, for reasons that will be clear from the following discussion.

The rotor 110 is configured to rotate about a central axis O. For example, as shown in Figure 1a, the rotor 110 may have an approximately circular or annular cross-sectional shape and the axis of rotation O of the rotor 110 may pass perpendicularly through the centre of the circular cross-section. The rotor 110 may be of a solid construction such that it can be directly supported on the axis of rotation O by a suitable support element in the motor 100. Alternatively, for example, the rotor 110 may be in the form of a hollow construction, such as cylinder, an annulus, or a tube, which rotates around the axis of rotation O.

The poles 110-1 - 110-4 of the rotor 110 may each be in the form of a protrusion of the first region 1101 of the rotor 101. The protrusions are disposed around a cylindrical surface of the rotor 110 which faces the stator 120.

For example, the rotor 110 shown in Figure 1a comprises a first region 1101 in which four protrusions are approximately equally spaced around the circumference of the rotor 110. Each of the protrusions corresponds to an individual pole 110-1 - 110-4 of the rotor 110. In between the protrusions, the first region 1101 comprises a plurality of recesses where the depth of the first region 1101 of the rotor 110 is less than it is in the region of the protrusions. These recesses of the first region 1101 are occupied by the portions of the second region 1102 of the rotor 110 referred to above. In particular, the recesses of the first region 1101 are filled by a plurality of filling portions 111-1 - 111-4 of the rotor 110.

As shown in Figure 1a, the filling portions 111-1 - 111-4 may be arranged to fill the recesses between the poles 110-1 to 110-4 such that the external surface of the rotor 110 is shaped as a smooth cylindrical surface. As outlined above, overall, the rotor 110 may be in the form of a solid cylinder or a hollow cylinder, although the shape of the rotor is not limited to these two examples, as long as the external surface of the rotor 110, or at least a portion around the entire circumference of the rotor 110, is shaped as a smooth cylindrical surface. As also outlined above, the poles 110-1 - 110-4 comprise magnetic materials and the filling portions 111-1 - 111-4 comprise non-magnetic materials. These magnetic materials and non-magnetic materials are discussed in more detail below.

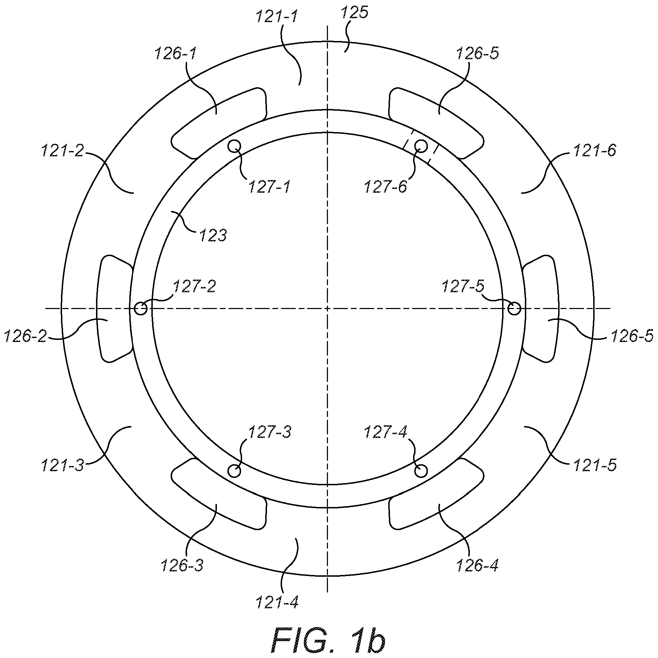

Figure 1b shows an exemplary structure of the stator 120. In this exemplary structure, the stator 120 may comprise a structure made out of one integrated piece of a magnetic material. Alternatively, the stator 120 may comprise multiple pieces of one or more magnetic materials combined together via, for example, welding. The stator 120 may comprise a plurality of electromagnets 121-1 - 121-6. The respective ones of the electromagnets 121-1 - 121-6 may comprise one or more wires which can conduct electric currents wound around the cores of the stator 120 defined by the portions of the stator 120 between cavities 126-1 - 126-6 formed within the stator 120. In the Figure 1b, the wires around each of the electromagnets 121-1 - 121-6, shown in Figure 1a, are not shown to illustrate only the stator 120 and only the cores of the electromagnets 121-1 - 121-6 are labelled accordingly. The part of the stator 120 toward the inner cavity which may, for example, be in the shape of a hollow cylinder which surrounds the exterior cylindrical surface of the rotor 110 may be called the housing 123 in this specification. The housing 123 may further comprise holes 127-1 - 127-6, each of which is disposed between the inner surface of the hollow cylindrical hole of the stator 120 and the respective ones of the cavities 126-1 -126-6. These holes 127-1 - 127-6 may assist in increasing the magnetic reluctance of the portions of the stator 120 around the holes 127-1 -127-6 such that the magnetic interaction between the electromagnets is minimised and such that magnetic field lines 122-1 - 122-4 may be formed within the electric motor 100, as will be described later. The holes 127-1 - 127-6 may be substantially empty such that they are filled with air during operation, or may be filled with non-magnetic material.

The part of the stator 120 toward the external surface of the stator 120 may be called an outer frame 125. The shape of the outer frame 125 may be approximately circular with a larger diameter than that of the housing 123. The outer frame 125 may be disposed substantially concentric with the housing 123 of the stator.

The stator 120 comprises the housing 123, the cores of the electromagnets 121-1 - 121-6, and the outer frame 125, formed of one or more magnetic materials. As discussed above, these parts of the stator 120 may be formed integrally as a single piece or respective components may be combined.

The design of the stator 120 as shown in Figure 1b is exemplary, however, and the stator 120 of this specification is not limited to the example shown in Figure 1b. Depending on the design or performance requirement of the electric motor 100, the design of the stator 120 may be modified appropriately. However, in any modified designs of the stator 120, the following two characteristics may be retained:

First, the housing 123 may be in close proximity with, or in contact with, the plurality of electromagnets 121-1 - 121-6. For example, as shown in Figure 1a, the plurality of electromagnets 121-1 - 121-6 may be located on the external, outwardly facing cylindrical surface of the housing 123, such that the housing 123 lies between the plurality of electromagnets 121-1 - 121-6 and the rotor 110.

Second, the housing 123 may have an approximately circular cross-sectional shape. The centre of this circular cross-section is, at least approximately, at the same location as the centre of the cross-section of the rotor 110 discussed. The centre of the cross section of the stator 120, or the housing 123, is aligned with the axis of rotation O of the rotor 101 discussed above. In the example shown in Figure 1a, the diameter of the circular cross-section of the housing 123 is larger than that of the rotor 101, so that the rotor 101 is substantially surrounded by the housing 123. This means that, at least in the example of Figure 1a, the surface of the rotor 110 around which the poles 110-1 - 110-4 are disposed is an outwardly facing surface of the rotor 110.

As discussed above, the rotor 110 may be arranged so as to be disposed within a hollow cylinder region defined by an inwardly facing surface of the housing 123 of the stator 120. The outwardly facing cylindrical surface of the rotor 110 and the inwardly facing cylindrical surface of the housing 123 are arranged in a concentric fashion such that a gap 124 is formed between the external cylindrical surfaces of the rotor 110 and the housing 123.

In Figure 1a, there are four poles in the rotor 110-1 - 110-4 and six electromagnets 121-1 - 121-6 in the stator 120. However, the arrangement of the motor 100 is not limited to these specific numbers of poles and electromagnets. For example, for a particular motor 100, the exact number of electromagnets of the stator 120 and the number of poles of the rotor 110 may be decided in dependence of factors such as the size of the motor 100, a corresponding dynamic response of the motor and the desired power characteristic of the motor. These will be described in more detail with examples of possible configurations of the electric motors 100 below.

The gap 124 between the rotor 110 and the stator 120 is filled, at least partially, with a plurality of rollable elements. As discussed above, the plurality of rollable elements may comprise magnetic material. The plurality of rollable elements may be made up of two groups of rollable elements with different magnetic characteristics. The first group may comprise a plurality of rollable elements formed of magnetic material, whereas the second group may comprise a plurality of rollable elements formed of non-magnetic material. The first group of rollable elements are referred to below as magnetic bearing elements 130, whilst the second group of rollable elements are referred to below as non-magnetic bearing elements 140.

In Figure 1a, both the magnetic bearing elements 130 and the non-magnetic bearing elements 140 may, for example, be in the form of either a plurality of cylindrical rollers or a plurality of ball bearings, or a plurality of conical bearings depending on the desired geometry of the electrical motor 100, and the corresponding design of the housing 123. Both the magnetic bearing elements 130 and the non-magnetic bearing elements 140 may be in contact with both the rotor 110 and the housing 123 of the stator 120. In this instance, the diameters of the magnetic bearing elements 130 and the non-magnetic bearing elements 140 are substantially equal to the width of the gap 124 between the rotor 110 and the stator 120. The presence and action of the magnetic and non-magnetic bearing elements 130, 140 in the gap 124 may improve the ability of the rotor 110 to rotate in a stable fashion, concentric to the stator 120.

The term 'magnetic material' as used herein means a magnetically permeable or magnetically susceptible material, in which the formation of a magnetic field is supported. In particular, materials whose relative permeability (µ/µ₀) is substantially larger than one are taken to be magnetic materials. Examples of such materials include Ferrous Nickel and Cobalt alloys, whose relative permeability ranges from 100 to 1000'S.

As used herein, the term 'non-magnetic material' refers to materials whose relative permeability is only negligibly different from one. For example, for most dielectric materials, the relative permeability differs from one by a negligible amount. Therefore, most dielectric materials, including plastics and ceramics, are non-magnetic materials. Examples of non-magnetic metals include austenitic stainless steel and brass.

Magnetic reluctance is inversely proportional to the relative permeability of a given material. Therefore, the magnetic materials have lower magnetic reluctance than the non-magnetic materials.

Magnetic field lines 122-1 - 122-4 always form a closed loop and the path of the loop depends on the magnetic reluctance of the surrounding materials. In particular, the magnetic field lines 122-1 - 122-4 may be concentrated around the path of least magnetic reluctance. Therefore, the magnetic field lines 122-1 - 122-4 may be concentrated within magnetic material and repelled from the non-magnetic materials.

The magnetic materials experience a strong attractive force under the gradient of the magnetic field generated by the plurality of electromagnets 121-1 - 121-6, while the non-magnetic materials experience negligible attractive force under the gradient of the magnetic field generated by the plurality of electromagnets 121-1 - 121-6.

As discussed above in relation to Figure 1a, the housing 123 of the stator 120, the magnetic bearing elements 130, and the poles 110-1 - 110-4 of the rotor 110 comprise magnetic materials. The composition of these components of the motor 100 may be substantially the same, in that each component may be formed of the same specific magnetic material, or mix of materials, as the other components. In this case, the materials used in each 'magnetic' component of the motor 100 may be chosen such that the relative permeability of each 'magnetic' component is as similar as possible to the relative permeability of each of the other 'magnetic' components. This ensures that discontinuities between the permeabilities of the 'magnetic' components of the motor 100 are minimised, which may lead to an improvement in motor efficiency.

Alternatively, however, these components may comprise different magnetic materials. The normal components of the magnetic field may be continuous through the interfaces formed by the housing 123, the magnetic bearing elements 130, and the poles of the rotor 110-1 -110-4, even when these components comprise different magnetic materials.

Therefore, the magnetic field lines 122-1 - 122-4 may still form a closed loop as long as a path of least magnetic reluctance is clearly defined from the housing 123 to the poles of the rotor 110-1 - 110-4 via the magnetic bearing elements 130 while the rotor 110 and the magnetic bearing elements 130 are rotating.

In order for the path of least magnetic reluctance to be clearly defined, the non-magnetic bearing elements 140 may be arranged to form regions of high magnetic reluctance and the relative permeabilities of the magnetic bearing elements may be chosen to be as high as possible.

The magnetic field lines 122-1 - 122-4 will be described in more detail in relation to the relevant components later.

In Figure 1a, as discussed above, the non-magnetic bearing elements 140 and the filling portions 111-1 - 111-4 of the rotor 110 comprise non-magnetic materials. In the case that the rotor 110 is in the form of a hollow cylinder, the hollow region bounded by the innermost part of the rotor 110 may also comprise non-magnetic material. The materials of the respective 'non-magnetic' components of the motor 100 may be identical. Alternatively, the material constructions of the different 'non-magnetic' components maybe different to one another. For example, the filling portions 111-1 - 111-4 of the second region of the rotor 110 may comprise ceramics or plastics, but the hollow region in the centre of the rotor 110, in case it is hollow, may comprise air.

As exemplary material choices, STEEL AISI 440C may be used for the magnetic bearing elements 130, STEEL AISI 316 may be used for the non-magnetic bearing elements 140, STEEL BS EN 10106: M330-35A may be used for both the first region 1101 and the second region 1102 of the rotor 110 and the housing 123 of the stator 120. In particular, it is possible to render materials such as STEEL BS EN 10106: M330-35A to be either magnetic or non-magnetic via a known process such as cold-rolling. However, the choice of materials for these components is not limited to these examples.

Figure 1a may represent a snapshot of the operation of the motor 100, in which the motor is operational and the rotor 110 is spinning around its axis O inside the housing 123 of the stator 120. In this case, at the moment of the snapshot of Figure 1a, only the topmost and bottommost electromagnets 121-1, 121-4 of the stator 120 are powered-on. These two electromagnets 121-1, 121-4 are located directly opposite each other. The other four electromagnets 121-2, 121-3, 121-5, 121-6, which are located in between the topmost and bottommost electromagnets 121-1, 121-4 around the outside of the rotor housing 123, are switched off.

The magnetic field lines 122-1 - 122-4 for this moment of snapshot are shown in Figure 1a. The magnetic field lines 122-1 - 122-4 are in the form of a loop which passes through the stator 120, the magnetic bearing elements 130 and the first region 1101 of the rotor 110. The magnetic field lines 122-1 - 122-4 represent the direction of the magnetic field at a given spatial position of the motor 100. In Figure 1a, for clarity of illustration, only four such field lines are shown. However, it will be appreciated that the illustrated field lines represent the magnetic field as whole and do not necessarily imply any particular strength in the field.

Figure 1a shows that the magnetic field lines 122-1 - 122-4 are substantially continuous across the rotor 110 and the housing 123 of the stator 120, via the magnetic bearing elements 130 located in the gap 124 between the rotor 110 and the stator 120. This continuity is facilitated by providing a path of least magnetic reluctance between the housing 123 of the stator 120 and the poles of the rotor 110. In particular, with reference to the field lines adjacent to the topmost electromagnet 121-1 shown in Figure 1a, it can be seen that the field lines extend continuously from the region of the housing 123 directly adjacent to the topmost electromagnet 121-1 into a plurality of individual magnetic bearing elements 130 located in the gap 124 between the housing 123 and the rotor 110. These plurality of magnetic bearing elements 130 are preferably in physical contact with the region of the housing 123 referred to above, so that any discontinuity caused by intermediate air that would otherwise be present in the gap 124 is prevented.

It can be seen from Figure 1a that the field lines then continue from the plurality of magnetic bearing elements 130 into a pole 110-1 of the rotor 110 on the opposite side of the gap 124. As before, the plurality of magnetic bearing elements 130 are preferably in physical contact with the pole 110-1 of the rotor 110. In other words, the magnetic bearing elements 130 may entirely traverse the gap 124 between the stator housing 123 and the rotor 110.

A corresponding behaviour of the magnetic field lines 122-1 - 122-4 is evident in the region of the motor 100 adjacent to the bottommost electromagnet 121-4, which as outlined above is also powered-on at the moment of the snapshot of Figure 1a. It can be seen from Figure 1a that the field lines pass directly and continuously from the region of the stator housing 123 adjacent to the bottommost electromagnet 121-4 into a plurality of magnetic bearing elements 130 located in the gap 124. The field lines then pass continuously from these magnetic bearing elements 130 directly into a pole 110-3 of the rotor 110 located opposite the bottommost electromagnet 121-4, across the gap 124, in a corresponding fashion to the field lines illustrated in the region of the topmost electromagnet 121-1.

In between the two opposite poles 110-1, 110-3 of the rotor 110 referred to in the description above, the magnetic field lines 122-1 - 122-4 extend through the first region 1101 of the rotor 110, which is formed of one or more magnetic materials. For example, as shown in Figure 1a, the magnetic field lines 122-1 - 122-4 may pass substantially around an inner circumferential region of the rotor 110 between the two opposite poles 110-1, 110-3. In between the two electromagnets 121-1, 121-4, the magnetic field may extend circumferentially through an outer frame 125.
The magnitudes of the magnetic permeabilities of the rotor poles 110-1- 110-4, the stator housing 123 and the magnetic bearing elements 130 may be the substantially the same, or when chosen differently, chosen such that the path of least magnetic reluctance is clearly defined from the housing 123 to the poles of the rotor 110-1 and 110-3 via the magnetic bearing elements 130 and such that the magnetic field lines 122-1 - 122-4 may be formed as described above.

Referring again to Figure 1a, without the presence of the magnetic bearing elements 130 in the gap 124 between the stator 120 and the rotor 110, the air gap between the rotor 110 and the stator 120 may cause a significant decrease in the strength of the magnetic field at the positions of the poles 110-1, 110-3 of the rotor 110. Such a decrease in the strength of the magnetic field at these locations would, to a significant extent, be due to the large discontinuity of magnetic permeabilities between the stator housing 123, the air gap and the rotor 110. Particular discontinuities would be present at the interface of the stator housing 123 and the air gap, and at the interface between the air gap and the poles 110-1, 110-3 of the rotor 110. If these discontinuities are such that the path of least magnetic reluctance does not form to traverse the interfaces, all or part of the magnetic field lines 121-1 - 121-4 may run along the circumferential direction of the gap 124, and the magnetic field lines 122-1 - 122-4 may not be formed as described above. The field strength at the location of the poles of the rotor 110 and the operation of the electric motor 100 may be consequently compromised. Since the efficiency of the electric motor 100 is closely related to the field strength at the location of the poles of the rotor 110, the size of any air gap may negatively affect the electrical current requirements of the electromagnets 121, the power factor of the motor and even the price of maintenance of the motor due to increased wear.

In the case that the magnetic permeabilities of the stator housing 123, the magnetic bearing elements 130 and the poles of the rotor 110-1- 110-4, are the same, the presence of the magnetic bearing elements 130 in the gap 124 between the rotor 110 and the stator housing 123 ensures that a path of least magnetic reluctance is formed across the rotor 110 and the stator 120 such that the magnetic field lines are concentrated along that path of least magnetic reluctance. In effect, the presence of the magnetic bearing elements 130 eliminates the gap 124 between the rotor 110 and the stator 120.

Similarly, in the case that the magnetic permeabilities of the stator housing 123, the magnetic bearing elements 130 and the poles of the rotor 110-1- 110-4 are not identical, if relative permeabilities of the magnetic bearing elements 130 are large enough, a path of least magnetic reluctance may be formed to run across the gap 124 between the rotor 110 and the stator housing 123, as discussed above. This has a similar effect to the case where the permeabilities of the components are identical in that magnetic reluctance due to the gap 124 is reduced.

It will be appreciated from the above discussion that the motor 100 described herein may provide advantages in terms of improved efficiency when compared to conventional electrical motors with air gaps between the stator and the rotor. For example, in conventional electrical motors, endeavours have been directed to minimising the air gap while also trying to address spurious effects such as static and dynamic eccentricity of the rotor. These spurious effects are pronounced when the conventional electrical motors operate at a high temperature due to thermal expansion. The motor 100 described herein does not rely on this approach. The presence of the bearing elements 130, 140 provides both improved efficiency by minimising magnetic discontinuities and also improved dynamic stability in the rotation of the rotor 110, without additional measures such as supporting shaft bearings, even at a high temperature.

In Figure 1a, respective ones of the non-magnetic bearing elements 140 are disposed between respective ones of the magnetic bearing elements 130 in the gap 124 between the rotor 110 and the stator 120. In other words, the magnetic bearing elements 130 and the non-magnetic bearing elements 140 are disposed to alternate one by one along the circumference of the gap 124. The bearing elements 130 and 140 in the gap may be arranged in the gap such that they do not touch each other. This specific arrangement of bearing elements 130, 140 may enable the magnetic field lines 122-1 - 122-4 to be locally confined within respective ones of the magnetic bearing elements 130 to run across the gap 124 rather than run along the circumference of the gap 124, while ensuring that the effective area of the magnetic bearing elements 130 between the electromagnets 121 that are powered-on and the adjacent poles 110-1 - 110-4 of the rotor 110 is substantially large such that the magnetic flux from the stator housing 123 to the rotor 110 may be kept large enough for operation of the motor 110.

For example, as discussed above, in Figure 1a, only the topmost and bottommost electromagnets 121-1 and 121-4 are powered-on. As depicted by the illustrated magnetic field lines 122-1 - 122-4, the magnetic field lines in the gap 124 between the rotor 110 and the stator housing 123 are confined around the two powered-on electromagnets 121-1, 121-4 and the respectively opposite poles 110-1, 110-3 of the rotor 110.

If the gap 124 between the rotor 110 and the stator 120 were packed only with magnetic bearing elements 130, it is possible, in some arrangements, that the magnetic field lines 122-1 - 122-4 would be able to penetrate away from these regions of the motor 100 by travelling along the circumference of the gap 124. This is because the path of least magnetic reluctance may be formed along the circumferential direction of the gap 124. For example, the magnetic field lines 122-1 - 122-4 may be able to propagate through adjacent ones of the plurality of magnetic bearing elements 130 if the individual elements 130 touch each other. Therefore, in case the gap 124 is packed only with magnetic bearing elements 130, the magnetic bearing elements 130 may be arranged such that they do not contact each other within the gap 124.

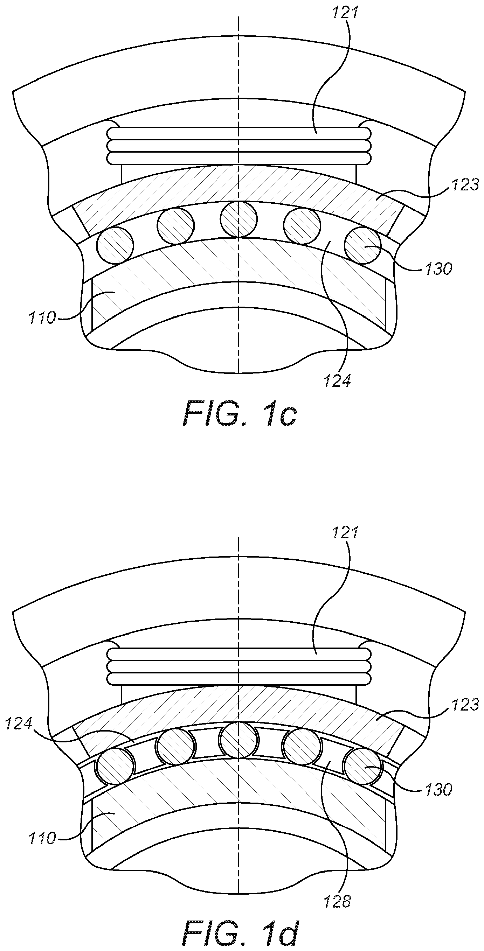

Figure 1c illustrates this situation in a first alternative configuration of the electric motor 100, in which the gap 124 is packed only with the magnetic bearing elements 130. Figure 1c shows a part of the gap 124 between the stator housing 123 and the rotor 110 within the electric motor 100. In the gap 124, the magnetic bearing elements 130 are arranged such that they do not touch each other and the space between the respective ones of the magnetic bearing elements 130 is substantially empty and filled with air during operation. Since the air is non-magnetic material, the magnetic field lines 122-1 - 122-4 may substantially run across the gap 124 through the magnetic bearing elements 130, and are restricted from propagating along the circumference of the gap 124.

Alternatively, to prevent touch-contact between the magnetic bearing elements 130 due to undesired slippage of the magnetic bearing means 130, mechanical spacers 128 comprising one or more non-magnetic materials may be inserted within the gap 124 between the magnetic bearing means 130 to ensure that the magnetic bearing elements 130 do not contact each other in the gap 124. Figure id illustrates this situation. The respective ones of the mechanical spacers 128 may be designed such that the magnetic bearing elements 130 may be spaced at regular intervals in the gap 124 without hindering the rotation of the magnetic bearing means 130. Since the mechanical spacers 128 comprise one or more non-magnetic materials, the magnetic field lines 122-1 - 122-4 may substantially run across the gap 124 rather than propagate along the circumference of the gap 124.

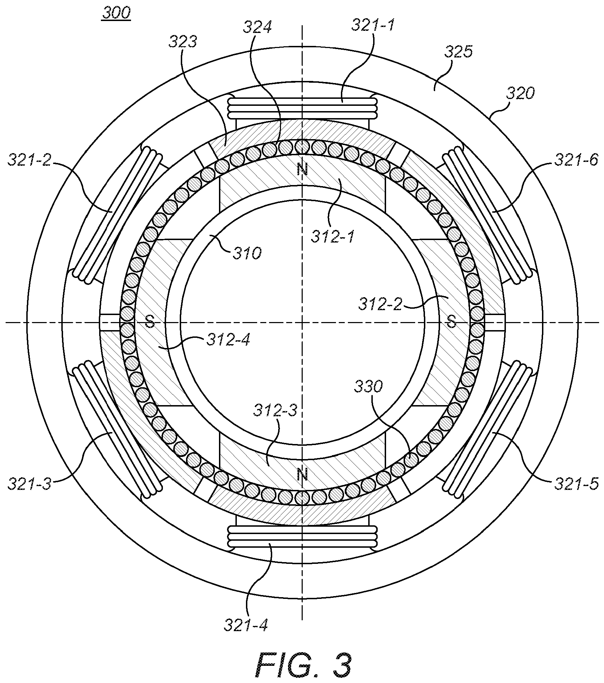

An electric motor 100 in which the gap 124 is filled only with the magnetic bearing elements 130 will be described later with Figure 3.

The arrangement of alternating magnetic bearing elements 130 and non-magnetic bearing elements 140 provides a solution to ensure localisation of the magnetic field in a desired area of the motor 100, while ensuring that the effective area through which magnetic field lines 122-1 - 122-4 can penetrate across the rotor 110 and the stator 120 is large enough. However, as will be described below, other arrangements of the plurality of magnetic bearing elements 130 and the non-magnetic bearing elements 140 may be possible.

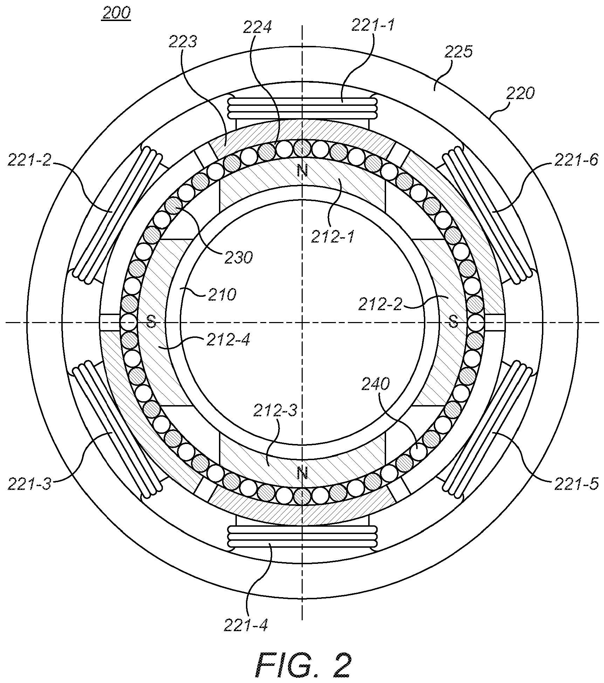

Figure 2 is a schematic cross-sectional view of a second exemplary embodiment of an electric motor 200. The electric motor 200 shown in Figure 2 is identical to the electric motor 100 shown in Figure 1a, except that the rotor 210 comprises four permanent magnets 212-1 - 212-4 as replacements for the poles of magnetic material 110-1 - 110-4 in the rotor 110 shown in Figure 1a.

At the moment of the snapshot of Figure 2, only the topmost and the bottommost electromagnets 221-1 and 221-4 are powered-on. The principle of operation may be similar to the electric motor 100 as shown in Figure 1a.

The configuration of the electric motor 200 shown in Figure 2 illustrates that the concept of disposing a mixture of magnetic bearing elements 230 and non-magnetic bearing elements 240 in the gap 224 between the rotor 210 and the stator 220 may not depend on the specific design of the rotor 210 in the electric motor and may be applied to various types of electric motors to improve the performance. The mixture of magnetic bearing elements 230 and non-magnetic bearing elements 240 disposed in the gap 224 between the rotor 210 and the stator 220 may assist in reducing the magnetic reluctance between the rotor 210 and the stator 220, therefore in forming the magnetic field lines 122-1 - 122-4 as described above, while at the same time serving as a mechanical bearing which provides mechanical stability of operation in the motor 100.

In particular, the specific arrangement where the magnetic bearing elements 230 and the non-magnetic bearing elements 240 alternate one by one as shown in Figure 1a and Figure 2 may be applied to a wide range of types of electric motors for the reasons discussed above. Other arrangements of the magnetic bearing elements 230 and the non-magnetic bearing elements 240 may also be possible if the specific geometry of the rotor 210 and the stator 220 are considered.

Figure 3 shows a schematic cross-sectional view of an electric motor 300 an example not corresponding to the invention, in the case where the gap 324 between the rotor 310 and the stator 320 is packed only with magnetic bearing elements 330. The magnetic bearing elements 330 may be arranged in the gap such that they do not touch each other.

Otherwise, the electric motor 300 shown in Figure 3 is identical to the electric motor 200 shown in Figure 2. Alternating poles of permanent magnets 312-1 - 312-4 are used as the poles of the rotor 310. When permanent magnets 312-1 - 312-4 are used, since the permanent magnets 312-1 to 312-4 are able to strongly magnetise the magnetic bearing elements 330 disposed near respective ones of the permanent magnets 312-1 to 312-4 locally, well-defined paths of least magnetic reluctance may be formed from the electromagnets 321-1 - 321-6 that are powered on and correspondingly opposing ones of the permanent magnets 312-1 - 312-4 traversing through respective ones of the magnetic bearing elements 330 in the relevant part of a gap 324. Therefore, the magnetic field lines 122-1 - 122-6 may be formed similar to the case of the electric motor 100. The specific example of the electric motor 300 illustrates that the operation of the motor 300 with only the magnetic bearing elements in the gap 324 is possible.

In general, the magnetic bearing elements 130, 230, 330 and the non-magnetic bearing elements 140, 240, 340 may be disposed in any fashion that when a powered-on electromagnet 121, 221, 321 and a pole of the rotor 110, 210, 310 are aligned, the magnetic field lines 122 are closed through the magnetic bearing elements 130, 230, 330, as described above. Preferably, the surface coverage area of the magnetic bearing elements 130, 230, 330 may be equal to or larger than the surface of the pole of the rotor 110, 210, 310 and the surface of the housing 123, 223, 323 of the stator 120, 220, 320 through which the magnetic field penetrates, such that magnetic reluctance is minimised. In relation to the positions of the electromagnets 121-1 - 121-6, 221-1 - 221-6, 321-1 - 321-6, the arrangements of the magnetic bearing elements 130, 230, 330 and the non-magnetic bearing elements 140, 240, 340 may be additionally such that magnetic reluctance is maximised when a powered-on electromagnet 121, 221 and a pole of the rotor 110, 210 are furthest apart.

When the magnetic bearing elements 130, 230, 330 and the non-magnetic bearing elements 140, 240, 340 are first assembled with the rotor 110, 210, 310 and the stator 120, 220, 320, the positions of the magnetic bearing elements 130, 230, 330 and the non-magnetic bearing elements 140, 240, 340 must be set with respect to the position of the poles of the rotor 110-1 - 110-4, 212-1 - 212-4, 312-1 - 312-4, with respect to the positions of the electromagnets in the stator 121-1 - 121-6, 221-1 - 221- 6, 321-1 - 321-6, at a level of precision appropriate for operation. When all of the bearing elements are magnetic as in the electric motor 300, the precision requirement of such alignment may be lower than those of the electric motors 100, 200 in which there are both magnetic bearing elements 130, 230 and non-magnetic bearing elements 140, 240. In these electric motors 100, 200, the intervals at which the magnetic bearing elements 130, 230 and the non-magnetic bearing elements 140, 240 must arranged in the gap 124, 224 considering the position of the poles of the rotor 112-1 -112-4 and 212-1 - 212-4 and the phase at which the electromagnets 121-1 - 121-6 and 221-1 - 221-6 are powered.

Many of the above arrangements of the magnetic bearing elements 130, 230, 330 and the non-magnetic bearing elements 140, 240, 340 in the gap 224 between the rotor 210 and the stator 220 may be widely applied to various types of electric motors. For example, the number of poles and the number of electromagnets may be varied depending on the desired task and characteristics of the motor. The type of the electric motors can vary, to include asynchronous, synchronous, permanent magnets, without permanent magnets, brush or brushless.

In the rest of the specification, specific examples according to these general considerations will be presented. In particular, the examples of possible arrangements of the magnetic bearing means 130, 230, 240 and non-magnetic bearing means 140, 240, 340 in the gap 124, 224, 324 will be illustrated in relation to the examples of possible arrangements of the rotor 110, 210, 220 and the electromagnets 121, 221, 321.

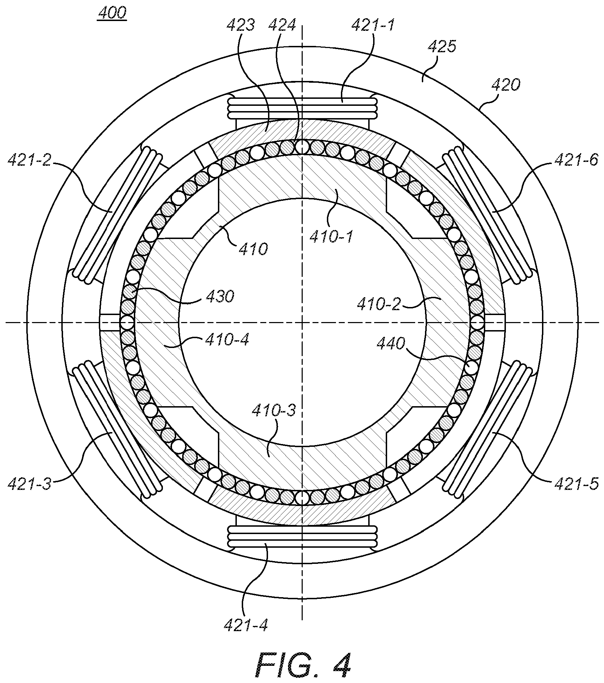

Electric motors 400, 500, 600 of fourth, fifth and sixth exemplary embodiments respectively are shown in Figures 4, 5 and 6, and in which two respective ones of magnetic bearing elements 430, 530, 630 alternate with one of the respective ones of non-magnetic bearing elements 440, 540, 640, along the circumference of the gaps 424, 524, 624.

The electric motor 400 shown in Figure 4 is identical to the electric motor 100 shown in Figure 1a, except that in the gap 424 between housing 423 and the rotor 410, two respective ones of the magnetic bearing elements 430 alternate with one of the respective ones of the non-magnetic bearing elements 440.

At the moment of the snapshot of Figure 4, only the topmost and the bottommost electromagnets 421-1 and 421-4 are powered-on. The principle of operation is similar to the electric motor 100 as shown in Figure 1a.

With this arrangement of the magnetic bearing elements 430 and the non-magnetic bearing elements 440, a path of least magnetic reluctance may be clearly defined from the housing 423 to the poles of the rotor 410-1 and 410-3 via the magnetic bearing elements 430 disposed between the electromagnets 421-1 and 421-4 and the poles of the rotor 410-1 and 410-3, respectively. Therefore the magnetic field lines may form a closed loop, similar to the ones described above in Figure 1a, although not shown in Figure 4. Also at the moment of the snapshot, magnetic reluctance may be maximised between the powered-on electromagnets 421-1, 421-4 and the poles of the rotor 410-2, 410-4.

The example of the electric motor 400 shown in Figure 4 illustrates that the mixture of bearing elements 430, 440 in which two respective ones of the magnetic bearing elements 430 alternate with one of the respective ones of the non-magnetic bearing elements 440 may be another working configuration of the bearing elements 430, 440 which may assist in reducing the magnetic reluctance between the rotor 410 and the stator 420 while at the same time serving as a mechanical bearing which provides mechanical stability of operation in the motor 400.

Since there are four poles in the rotor 410 and the six electromagnets 421-1 - 421-6 operate in three phases, the motor step angle of the electric motor 400 is 30 degrees. Within the gap 424, the angular period around the circumference along the gap 424 in which the non-magnetic bearing elements 440 are disposed is 15 degrees. Since the angular period of the non-magnetic bearing elements 440 equals half the motor step angle, when the rotor is rotated by one motor step angle, any given couple of the magnetic bearing elements 430 may be positioned at the locations which were occupied by the neighbouring couple of the magnetic bearing elements 430 before the rotation of the rotor. In other words, the arrangements of the magnetic bearing elements 430 and the non-magnetic bearing elements 440 may be reproduced. The torque may remain substantially constant during the operation of the electric motor 400.

In general, when the angular period of the non-magnetic bearing elements is proportional to the half of the motor step angle, the arrangements of the bearing elements 430, 440 remain in effect unchanged after rotating the rotor 410 by one motor step angle, therefore the torque may remain substantially constant during the operation of the electric motor 400. This mode of operation may be called an 'operation without profile shift' for this specification.

The advantage of 'operation without profile shift' over 'operation with profile shift' is stability of operation of the electric motor 400 due to the fact that the torque may remain substantially constant during the operation of the electric motor 400.

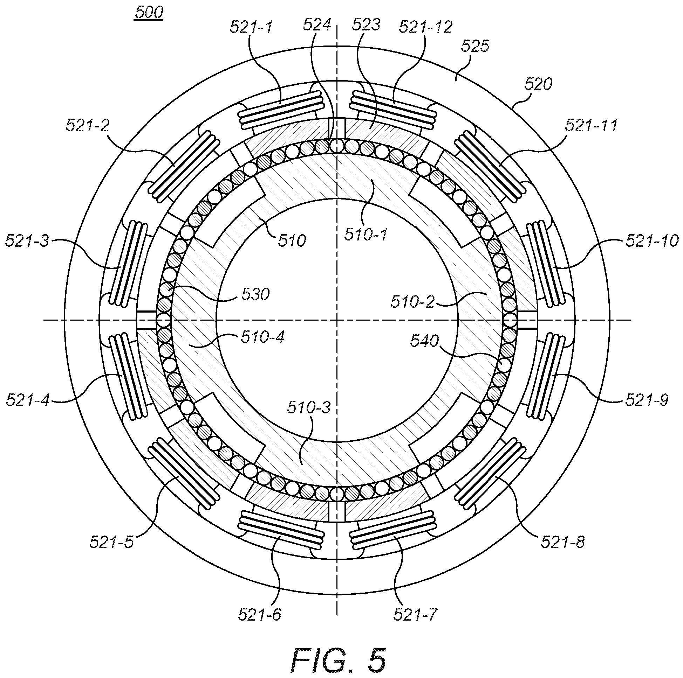

The electric motor 500 shown in Figure 5 is identical to the electric motor 400 shown in Figure 4, except that the stator 520 comprises twelve electromagnets 521-1 - 521-12. At the moment of the snapshot of Figure 5, only the topmost two and the bottommost two electromagnets 521-1, 521- 12 and 521-6, 521-7 are powered-on. In other words, the electric motor 500 operates also in three phases similar to the electric motors 100, 200, 300, 400 shown above. The principle of operation is similar to the electric motor 400 as shown in Figure 4. Therefore, the magnetic field lines 122-1 - 122-4 may be formed in a closed loop, similarly to the ones shown in Figure 1a.

The example of the electric motor 500 shown in Figure 5 illustrates that the mixture of bearing elements 530, 540 in which two respective ones of the magnetic bearing elements 530 alternate with one of the respective ones of the non-magnetic bearing elements 540 may also work with an electric motor configuration that employs twelve electromagnets 521-1 - 521-12.

Since there are four poles in the rotor 510, 510-1 - 510-4 and the electromagnets 521-1 - 521-12 operate in three phases, the motor step angle of the electric motor 500 is 30 degrees. Within the gap 524, the angular period in which the non-magnetic bearing elements 540 are disposed is 15 degrees. Since both half the motor step angle and the angular period are 15 degrees, the electric motor 500 operates 'without profile shift,' in which the torque may remain substantially constant during the operation of the electric motor 500, as explained above.

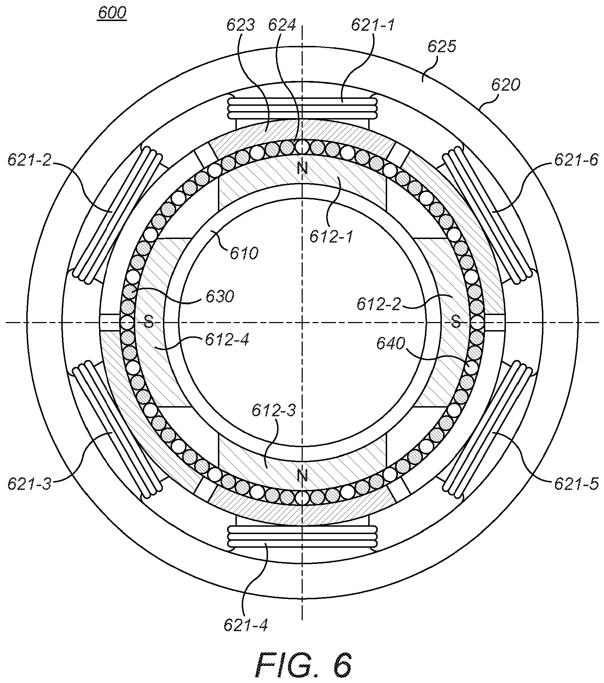

The electric motor 600 shown in Figure 6 is identical to the electric motor 400 shown in Figure 4, except that the rotor 610 comprises four permanent magnets 612-1 - 612-4. At the moment of the snapshot of Figure 6, only the topmost and the bottommost electromagnets 621-1 and 621-4 are powered-on. The electric motor 600 operates also in three phases. The principle of operation is similar to the electric motor 400 as shown in Figure 4.

The example of the electric motor 600 shown in Figure 6 illustrates that the mixture of bearing elements 630, 640 in which two respective ones of the magnetic bearing elements 630 alternate with one of the respective ones of the non-magnetic bearing elements 640 may also work with a motor configuration that employs permanent magnet poles 612-1 - 612-4 of the rotor 610.

Since there are four poles in the rotor 610, 612-1 - 612-4 and the electromagnets 621-1 - 621-6 operate in three phases, the motor step angle of the electric motor 600 is 30 degrees. Within the gap 624, the angular period in which the non-magnetic bearing elements 640 are disposed is 15 degrees. Therefore, the electric motor 600 also operates 'without profile shift.'

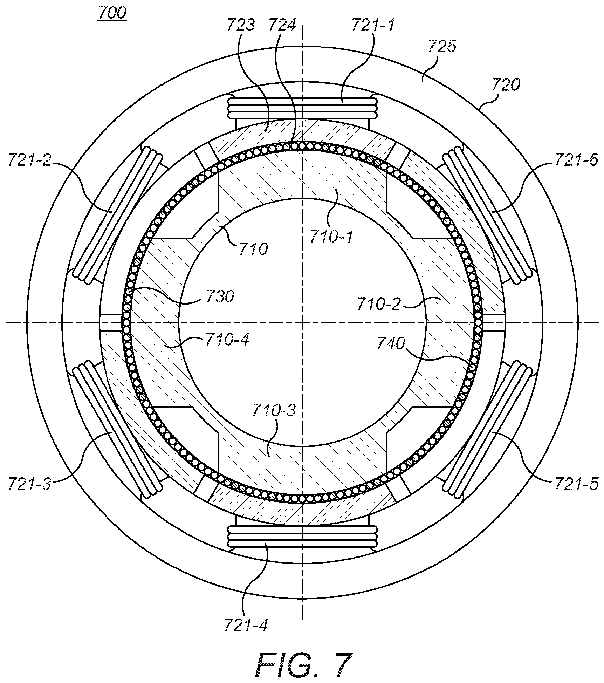

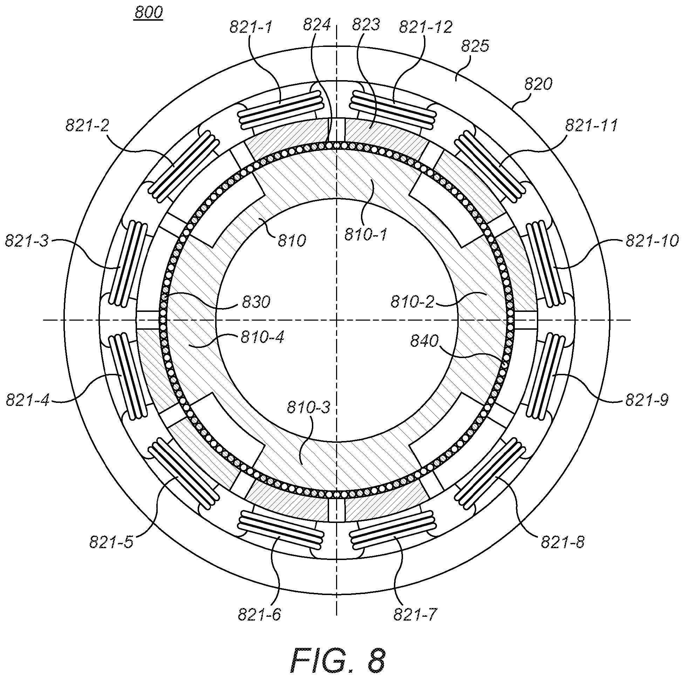

Electric motors 700 and 800 of seventh and eighth exemplary embodiments respectively are shown in Figures 7 and 8, and in which three respective ones of magnetic bearing elements 730 and 830 alternate with three respective ones of non-magnetic bearing elements 740 and 840.

The electric motor 700 shown in Figure 7 is identical to the electric motors 100 and 400 shown in Figures 1 and 4, except that in the gap 724 between housing 723 and the rotor 710, three respective ones of the magnetic bearing elements 730 alternate with three respective ones of the non-magnetic bearing elements 740.

At the moment of the snapshot of Figure 7, only the topmost and the bottommost electromagnets 721-1 and 721-4 are powered-on. The electric motor 700 operates also in three phases. The principle of operation is similar to the electric motors 100 and 400 as shown in Figures 1 and 4.

The example of the electric motor 700 shown in Figure 7 illustrates that the mixture of bearing elements 730, 740 in which three respective ones of the magnetic bearing elements 730 alternate with three respective ones of the non-magnetic bearing elements 740 may be a possible configuration to reduce magnetic reluctance between the housing 723 and the poles of the rotor 710, 710-1 and 710-3.

Since there are four poles in the rotor 710, 712-1 - 712-4 and the electromagnets 721-1 - 721-6 operate in three phases, the motor step angle of the electric motor 600 is 30 degrees. Within the gap 724, the angular period in which the non-magnetic bearing elements 640 are disposed is 15 degrees. Therefore, the electric motor 700 also operates in a 'without profile shift' mode.

The electric motor 800 shown in Figure 8 is identical to the electric motor 700 shown in Figure 7, except that the stator 820 comprises 12 electromagnets 821-1 - 821-12. At the moment of the snapshot of Figure 8, only the topmost two and the bottommost two electromagnets 821-1, 821- 12 and 821-6, 821-7 are powered-on. In other words, the electric motor 800 operates in three phases. The principle of operation is similar to the electric motor 700 as shown in Figure 7. The electric motor 800 operates in a 'without profile shift' mode.

All of the examples of the electric motors 100, 200, 300, 400, 500, 600, 700, 800 shown in Figures 1a, 2, 3, 4, 5, 6, 7, 8 operate in 'without profile shift' mode. In particular, in the electric motor 300 shown in Figure 3, there are only magnetic bearing elements 330 present in the gap 324. However, since the arrangement of the magnetic bearing elements 330 remains unchanged after the rotation of the rotor 310 by a motor step angle, the electric motor 300 operates 'without profile shift.'

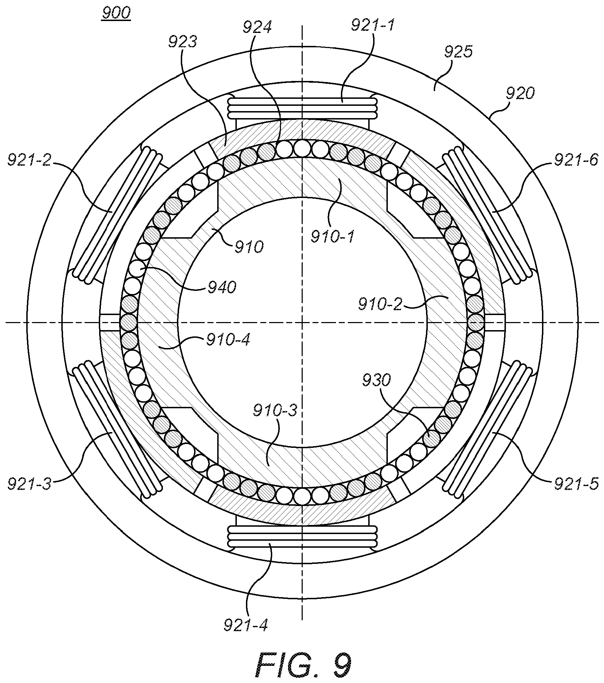

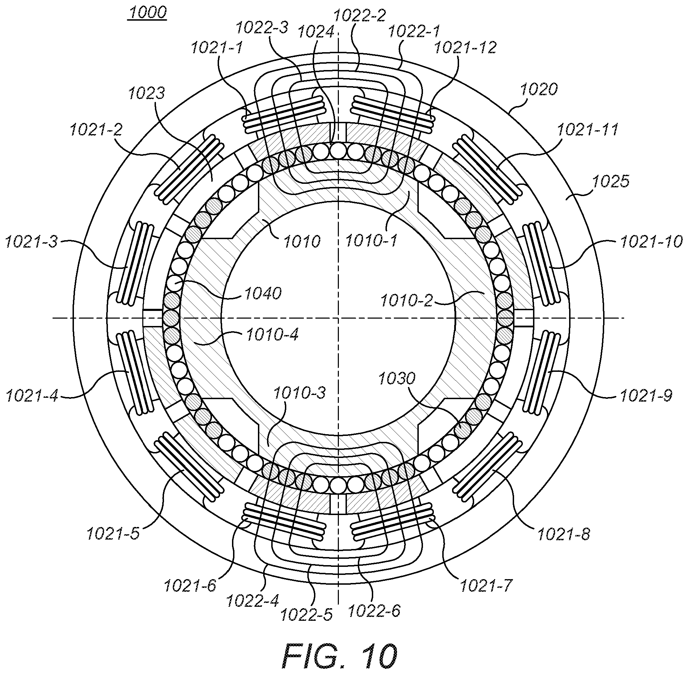

Electric motors 900 and 1000 of ninth and tenth exemplary embodiments respectively are shown in Figures 9 and 10, and in which three respective ones of magnetic bearing elements 930 and 1030 alternate with three respective ones of non-magnetic bearing elements 940 and 1040 in the gaps 924 and 1024, as in the electric motors 700 and 800. However, the angular period between each group of three non-magnetic bearing elements of these electric motors is not proportional to half the motor step angle of the rotors 910 and 1010.

There are four poles in the rotors 910, 1010. The electromagnets 921-1 - 921-6, 1021-1 - 1021-12 operate in three phases. Therefore, the motor step angle of the electric motors 900 and 1000 is 30 degrees. The angular period in which the non-magnetic bearing elements 940 and 1040 are disposed is 36 degrees, which is not proportional to half the motor step angle the electric motors 900 and 1000. Therefore, during the operation of the electric motors 900 and 1000, the torque may vary periodically in waves. This mode of operation will be called 'with profile shift' in this specification.

Figure 10 may represent a snapshot of the operation of the motor 1000, in which the motor 1000 is operational and the rotor 1010 is spinning around its axis O inside the housing 1023 of the stator 1020. In this case, at the moment of the snapshot of Figure 10, only the topmost 2 electromagnets 1021-1 and 1021-12, and the bottommost 2 electromagnets 1021-6 and 1021-7 of the stator 1020 are powered-on. The other electromagnets are switched off.

The magnetic field lines 1022-1 - 1022-6 for this moment of snapshot are shown in Figure 10. The magnetic field lines 1022-1 - 1022-6 are in the form of a loop which passes through the stator 1020, the magnetic bearing elements 1030 and the poles of the rotor 1010-1 - 1010-4. The field lines represent the direction of the magnetic field at a given spatial position of the motor 1000. In Figure 10, for clarity of illustration, only six such field lines are shown. However, it will be appreciated that the illustrated field lines represent the magnetic field as whole and do not imply any particular strength in the field.

Figure 10 shows that the magnetic field lines 1022-1 - 1022-6 are substantially continuous across the rotor 1010 and the housing 1023 of the stator 1020, via the magnetic bearing elements 1030 located in the gap 1024 between the rotor 1010 and the stator 1020. This continuity is facilitated by providing a path of least magnetic reluctance between the housing 1023 of the stator 1020 and the poles of the rotor 1010. In particular, with reference to the field lines 1022-1 - 1022-3 adjacent to the topmost two electromagnets 1021-1 and 1021-12 shown in Figure 10, it can be seen that the field lines extend continuously from the topmost left electromagnet 1021-1 through the region of the housing 1023 directly adjacent to the topmost left electromagnet 1021-1 into three individual magnetic bearing elements 1030 located in the gap 1024 between the region of the housing 1023 directly adjacent to the topmost left electromagnet 1021-1 and the rotor 1010.

It can be seen from Figure 10 that the field lines 1022-1 - 1022-3 then continue from the three magnetic bearing elements 1030 into a pole 1010-1 of the rotor 110 on the opposite side of the gap 1024. The field lines 1022-1 - 1022-3 may extend toward the right direction within the pole 1010-1 of the rotor 1010 and then continue toward another three individual magnetic bearing elements 1030 located in the gap 1024 between the region of the housing 1023 directly adjacent to the topmost right electromagnet 1021-12 and the rotor 1010. The field lines 1022-1 -1022-3 may traverse the gap 1024 to reach the topmost right electromagnet 1021-12 and pass substantially circumferentially through an outer frame 1025. As a whole, the magnetic field lines 1022-1 - 1022-3 may form a loop around the region of the motor 1000 defined by the topmost two electromagnets 1021-1 and 1021-12, the pole 1010-1 of the rotor opposing the two electromagnets at the moment of the snapshot through two sets of three magnetic bearing elements 1030 in the gap 1024. In order for the loop to form as described here, the topmost two electromagnets 1021-1 and 1021-12 may be powered to be of opposite polarity to each other.

Similar description applies to the magnetic field lines 1022-4 - 1022-6 on the opposite side of the motor 1000.

In contrast to the magnetic field lines 122-1 - 122-4 described above in Figure 1 for motor 100, in which the loops formed by the magnetic field lines enclosed poles 110-2 and 110-4 which do not oppose the electromagnets 121-1 and 121-4 that are powered-on at the moment of the snapshot, the loops formed by the magnetic field lines 1022-1 - 1022-6 may traverse through only the poles 1010-1 and 1010-3 opposite the electromagnets 1021-1, 1021-2, 1021-6, and 1021-7 that are powered-on at the moment of the snapshot.

In the examples shown in Figures 1 to 10, four different arrangements of the bearing elements 130, 140, 230, 240, 330, 340, 430, 440, 530, 540, 630, 640, 730, 740, 830, 840, 930, 940, 1030, 1040 in the gaps 124, 224, 324, 424, 524, 624, 724, 824, 924, 1024 of electric motors 100, 200, 300, 400, 500, 600, 700, 800, 900, 1000 have been given: an arrangement in which one of the respective ones of the magnetic bearing elements 130, 230 alternates with one of the respective ones of the non-magnetic elements 140, 240 (Figures 1, 2), an arrangement in which there are only magnetic bearing elements 330 (Figure 3), an arrangement in which two respective ones of the magnetic bearing elements 430, 530, 630 alternate with one of the respective ones of the non-magnetic bearing elements 440, 540, 640 (Figures 4, 5 and 6), and an arrangement in which three respective ones of the magnetic bearing elements 730, 830, 930, 1030 alternate with three respective ones of the non-magnetic bearing elements 740, 840, 940, 1040 (Figures 7, 8, 9 and 10).

However, the arrangements of the bearing elements 130, 140, 230, 240, 330, 340, 430, 440, 530, 540, 630, 640, 730, 740, 830, 840, 930, 940, 1030, 1040 in the gaps 124, 224, 324, 424, 524, 624, 724, 824, 924, 1024 are not limited to these examples.

As long as a path of least magnetic reluctance can be clearly defined from the housing 123, 223,323, 423, 523, 623, 723, 823, 923, 1023 to the poles of the rotor 110, 210, 310, 410, 510, 610, 710, 810, 910, 1010 via the magnetic bearing elements 130, 230, 330, 430, 530, 630, 730, 830, 930, 1030, at appropriate moments of operation such that the magnetic field lines 122-1 - 122-4 similar to the ones shown in Figure 1a may be formed, any suitable combinations of the magnetic bearing elements 130, 230, 330, 430, 530, 630, 730, 830, 930, 1030 and non-magnetic bearing elements 140, 240, 340, 440, 540, 640, 740, 840, 940, 1040 may be adopted depending on the design of each electric motor 100, 200, 300, 400, 500, 600, 700, 800, 900, 1000.

Also, as long as a similar principle is satisfied, other components such as the design of the rotor 110, 210, 310, 410, 510, 610, 710, 810, 910, 1010 is not limited to those disclosed above and in the Figures.

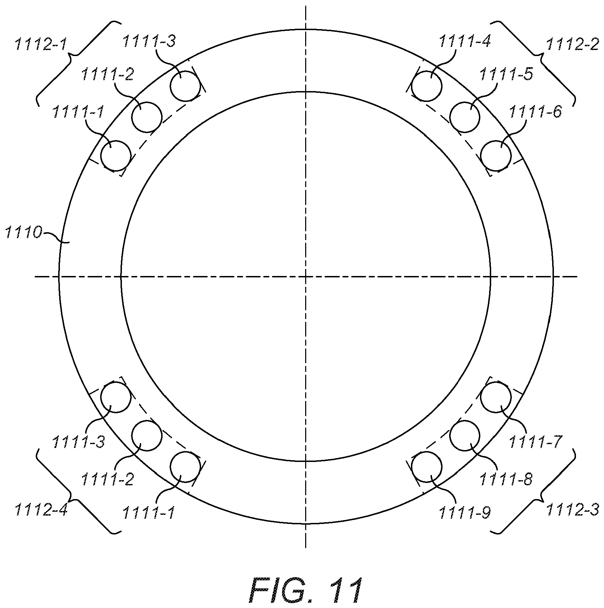

Figure 11 shows an alternative design of a rotor 1110. As discussed above with Figure 1a, the rotor 110 described so far comprises non-magnetic filling portions 111-1 - 111-4, which may be arranged to fill the recesses between the poles 110-1 to 110-4 such that the external surface of the rotor 110 is shaped as a smooth cylindrical surface.

In the alternative design of the rotor 1110 shown in Figure 11, the rotor 1110 may be in the form of a hollow cylinder, although a similar design may be applied to a solid cylinder. Instead of the protruding poles and the recesses included in the rotor 110 shown in Figure 1a, the rotor 1110 comprises multiple holes 1111 which may be empty or filled with non-magnetic materials. A predetermined number of holes 1111 disposed close to one another may be grouped together as a group and a predetermined number of groups 1112 of holes 1111 may be disposed around the cylinder and substantially equally spaced around the rotor 1110. The holes 1111 may be formed along the axis of the cylinder of the rotor 1110 and sufficiently away from the external surface of the rotor 1110 such that the external surface of the rotor 1110 retains the shaped of a smooth cylindrical surface.

In the example shown in Figure 11, the rotor 1110 comprises twelve holes 1111-1 - 1111-12. They are grouped into four groups, 1112-1 -1112-4, with respectively comprise three holes each, 1111-1 - 1111-3, 1111-4 - 1111-6, 1111-7 - 1111-9, and 1111-10 - 1111-12. The respective ones of the twelve holes 1111-1 - 1111-12 may be empty or filled with non-magnetic materials.

Compared with the design of the rotor 110 of the electric motor 100 shown in Figure 1a, the portions of the rotor 1110 around each group 1112-1 - 1112-4 of holes 1111-1 - 1111-12, assumes the role of the filling portions 111-1 to 111-4, and the portions in between each group 1112-1 - 1112-4 of holes 1111-1 - 1111-12 assumes the role of the poles 110-1 - 110-4 of the rotor 110.

Since it is crucial for the operation of the electric motor 100, 1100 that the external surface of the rotor 110, 1110 is as smooth as possible, a rotor 110 which includes protruding poles 110-1 - 110-4 and filling portions 111-1 - 111-4 may require an additional engineering step or an additional testing step during manufacturing, depending on the material to be used and manufacturing processes available. The design of the rotor 1110 shown in Figure 11 may remove the necessity for such steps while ensuring smooth cylindrical external surface of the rotor 1110.

In the examples shown in Figures 1 to 10, the rotor 110, 210, 310, 410, 510, 610, 710, 810, 910, 1010 is disposed inside the space defined by the internal surface of the stator 120, 220, 320, 420, 520, 620, 720, 820, 920, 1020 and the magnetic bearing elements 130, 230, 330, 430, 530, 630, 730, 830, 930, 1030 are disposed inside the gap 124, 224, 324, 424, 524, 624, 724, 824, 924, 1024 between the rotor and the stator formed within that space. As an alternative arrangement, the rotor may be designed such that the stator is disposed inside the space defined by the internal surface of the rotor and the magnetic bearing elements are disposed inside the gap between the rotor and the stator.

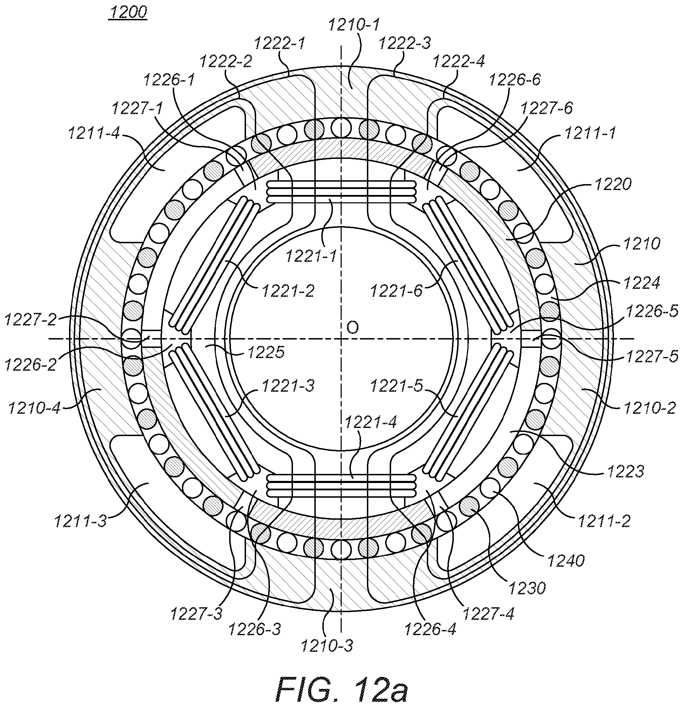

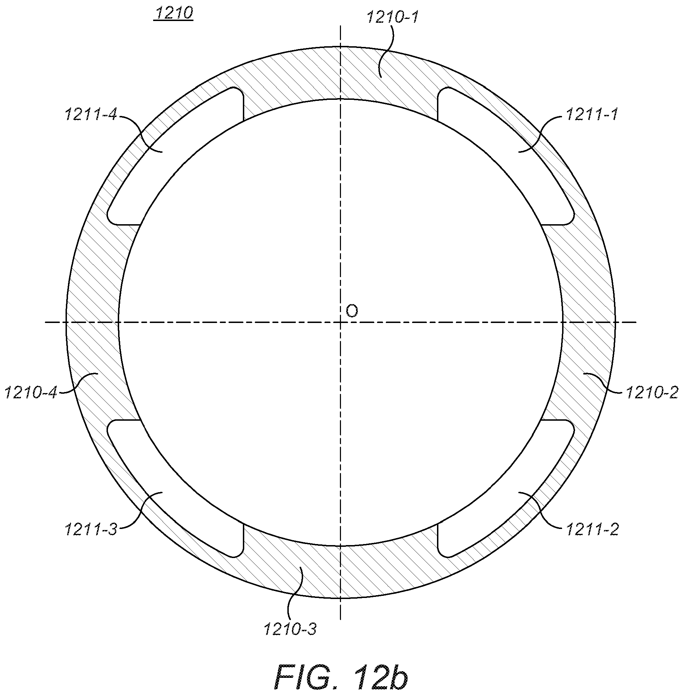

Figure 12a shows a schematic of a cross sectional view of an electric motor 1200 of an eleventh embodiment. The electric motor 1200 comprises a rotor 1210 and a stator 1220. Figure 12b shows a schematic cross sectional view of the rotor 1210 of the motor 1200 of figure 12a.

The rotor 1210 comprises a first region 12101 and a second region 12102. The first region 12101 of the rotor 1210 comprises at least one magnetic material, whereas the second region 12102 of the rotor 1210 comprises non-magnetic material.

The first region 12101 of the rotor 1210 comprises a plurality of poles 1210-1, 1210-2, 1210-3, 1210-4. The second region 12102 of the rotor 1210 may comprise a plurality of non-magnetic portions 1211-1, 1211-2, 1211-3, 1211-4, which may be located between the plurality of poles 1210-1 - 1210-4 of the first region 12101. These non-magnetic portions 1211-1 - 1211-4 of the second region of the rotor 1210 are referred to below as filling portions 1211-1 - 1211-4, for reasons that will be clear from the following discussion.

The rotor 1210 is configured to rotate about a central axis O. For example, as shown in Figures 12a and 12b, the rotor 1210 may have an approximately circular or annular cross-sectional shape and the axis of rotation O of the rotor 1210 may pass perpendicularly through the centre of the circular cross-section. The rotor 1210 may be in the form of a hollow construction, such as cylinder, an annulus, or a tube, which rotates around the axis of rotation O.

The poles 1210-1 - 1210-4 of the rotor 1210 may each be in a form similar to a sector of the first region 1101 of the rotor 1201. Alternatively, the form of the poles 1210-1 - 1210-4 of the rotor 1210 may not exactly correspond to that of a sector, as rigorously defined in geometry, but be in a form that occupies a predetermined localised portion of the annulus shape of the rotor 1210, which includes a part of the internal surface and a part of the external surface of the rotor 1210, disposed at a substantially regular interval, around an internal surface of the rotor 1210 which faces the stator 1220.

For example, the rotor 1210 shown in Figures 12a and 12b comprises a first region 12101 in which four such regions are approximately equally spaced around the circumference of the rotor 1210. Each of these regions corresponds to an individual pole 1210-1 - 1210-4 of the rotor 1210. In between the sectors, the first region 12101 comprises a plurality of recesses where the depth of the first region 12101 of the rotor 1210 is less than it is in the region of the poles 1210-1 - 1210-4. These recesses of the first region 12101 are occupied by the portions of the second region 12102 of the rotor 1210 referred to above. In particular, the recesses of the first region 12101 are filled by a plurality of filling portions 1211-1 - 1211-4 of the rotor 1210.

As shown in Figures 12a and 12b, the filling portions 1211-1 - 1211-4 may be arranged to fill the recesses between the poles 1210-1 to 1210-4 such that the internal surface of the rotor 1210 is shaped as a smooth cylindrical surface. As outlined above, overall, the rotor 1210 may be in the form of a hollow cylinder, although the shape of the rotor is not limited to this example, as long as the internal surface of the rotor 1210 is shaped as a smooth cylindrical surface. As also outlined above, the poles 1210-1 - 1210-4 comprise magnetic materials and the filling portions 1211-1 - 1211-4 comprise non-magnetic materials. The characteristics of magnetic materials and non-magnetic materials are discussed in detail above.

The stator 1220 may comprise a structure made out of one integrated piece of a magnetic material. Alternatively, the stator 1220 may comprise multiple pieces of one or more magnetic materials combined together via, for example, welding. The stator 1220 may comprise a plurality of electromagnets 1221-1 - 1221-6. The respective ones of the electromagnets 1221-1 - 1221-6 may comprise one or more wires which can conduct electric currents wound around the cores of the stator 1220 defined by the portions of the stator 1220 between the cavities 1226-1 - 1226-6 formed within the stator 1220. The external surface of the stator 1220 may be in the shape of a cylinder which faces the internal cylindrical surface of the rotor 1210 and this part including the external surface of the stator will be called the housing 1223 to be consistent with the previous description of the electric motors shown in Figures 1 to 10. The housing 1223 may further comprise holes 1227-1 - 1227-6, each of which is disposed between the external cylindrical surface of the stator 120 and the respective ones of the cavities 1226-1 -1226-6. These holes 1227-1 - 1227-6 may assist in increasing the magnetic reluctance of the portions of the stator 1220 around the holes 1227-1 -1227-6 such that the magnetic interaction between the electromagnets is minimised and such that magnetic field lines 1222-1 - 1222-4 may be formed within the electric motor 1200, as will be described later. The holes 1227-1 - 1227-6 may be substantially empty such that they are filled with air during operation, or may be filled with non-magnetic material.

The part of the stator 1220 toward the internal surface of the stator 1220 may be called an inner frame 1225. The shape of the inner frame 1225 may be approximately circular with a smaller diameter than that of the housing 1223. The inner frame 1225 may be disposed substantially concentric with the housing 1223 of the stator.

The stator 1220 comprises the housing 1223, the cores of the electromagnets 1221-1 - 1221-6, and the inner frame 1225, formed of one or more magnetic materials. As discussed above, these parts of the stator 1220 may be formed integrally as a single piece or respective components may be combined.

The design of the stator 1220 as shown in Figure 12a is one exemplary embodiment, although the stator 1220 of this specification is not limited to the example shown in Figure 12a. Depending on the design or performance requirement of the electric motor 1200, the design of the stator 1220 may be modified appropriately. However, in any modified designs of the stator 1220, the following two characteristics may be retained:

First, the housing 1223 may be in close proximity with, or in contact with, the plurality of electromagnets 1221-1 - 1221-6. For example, as shown in Figure 12a, the plurality of electromagnets 1221-1 - 1221-6 may be located on the external, outwardly-facing cylindrical surface of the housing 1223, such that the housing 1223 lies between the plurality of electromagnets 1221-1 - 1221-6 and the rotor 1210.

Second, the housing 1223 may have an approximately circular cross-sectional shape. The centre of this circular cross-section is, at least approximately, at the same location as the centre of the cross-section of the rotor 1210 discussed. The centre of the cross section of the stator 1220, or the housing 1223, is aligned with the axis of rotation O of the rotor 1201 discussed above. In the example shown in Figure 12a, the diameter of the circular cross-section of the housing 123 is smaller than that of the rotor 1201, so that the rotor 1201 substantially surrounds the housing 1223. This means that, at least in the example of Figure 12a, the surface of the rotor 1210 around which the poles 1210-1 - 1210-4 are disposed is an inwardly facing internal surface of the rotor 1210.

As discussed above, the housing 1223 of the stator 1220 may be arranged so as to be disposed within a hollow cylinder region defined by an inwardly facing internal surface of the rotor 1210. The outwardly facing cylindrical surface of the housing 1223 of the stator 1220 and the inwardly facing cylindrical surface of the rotor 1210 are arranged in a substantially concentric fashion such that a gap 1224 is formed between the internal cylindrical surfaces of the rotor 1210 and the housing 1223.

In Figure 12a, there are four poles in the rotor 1210-1 - 1210-4 and six electromagnets 1221-1 - 1221-6 in the stator 1220. However, the arrangement of the motor 1200 is not limited to these specific numbers of poles and electromagnets. For example, for a particular motor 1200, the exact number of electromagnets of the stator 1220 and the number of poles of the rotor 1210 may be decided in dependence of factors such as the size of the motor 1200, a corresponding dynamic response of the motor and the desired power characteristic of the motor.

The gap 1224 between the rotor 1210 and the stator 1220 is filled, at least partially, with a plurality of rollable elements. As discussed above, the plurality of rollable elements may comprise magnetic material. Alternatively, the plurality of rollable elements may be made up of two groups of rollable elements with different magnetic characteristics. The first group may comprise a plurality of rollable elements formed of magnetic material, whereas the second group may comprise a plurality of rollable elements formed of non-magnetic material. The first group of rollable elements are referred to below as magnetic bearing elements 1230, whilst the second group of rollable elements are referred to below as non-magnetic bearing elements 1240.

In Figure 12a, both the magnetic bearing elements 1230 and the non-magnetic bearing elements 1240 may, for example, be in the form of either a plurality of cylindrical rollers or a plurality of ball bearings, or a plurality of conical bearings depending on the desired geometry of the electrical motor 1200, and the corresponding design of the housing 1223. Both the magnetic bearing elements 1230 and the non-magnetic bearing elements 1240 may be in contact with both the rotor 1210 and the housing 1223 of the stator 1220. In this instance, the diameters of the magnetic bearing elements 1230 and the non-magnetic bearing elements 1240 are substantially equal to the width of the gap 1224 between the rotor 1210 and the stator 1220. The presence and action of the magnetic and non-magnetic bearing elements 1230, 1240 in the gap 1224 may improve the ability of the rotor 1210 to rotate in a stable fashion, concentric to the stator 1220. Magnetic field lines 1222-1 - 1222-4 always form a closed loop and the path of the loop depends on the magnetic reluctance of the surrounding materials. In particular, the magnetic field lines 1222-1 - 1222-4 may be concentrated around the path of least magnetic reluctance. Therefore, the magnetic field lines 1222-1 - 1222-4 may be concentrated within magnetic material and repelled from the non-magnetic materials.

The magnetic materials experience a strong attractive force under the gradient of the magnetic field generated by the plurality of electromagnets 1221-1 - 1221-6, while the non-magnetic materials experience negligible attractive force under the gradient of the magnetic field generated by the plurality of electromagnets 1221-1 - 1221-6.

The housing 1223 of the stator 1220, the magnetic bearing elements 1230, and the poles 1210-1 - 1210-4 of the rotor 1210 comprise magnetic materials. The composition of these components of the motor 1200 may be substantially the same, in that each component may be formed of the same specific magnetic material, or mix of materials, as the other components. In this case, the materials used in each 'magnetic' component of the motor 1200 may be chosen such that the relative permeability of each 'magnetic' component is as similar as possible to the relative permeability of each of the other 'magnetic' components. This ensures that discontinuities between the permeabilities of the 'magnetic' components of the motor 1200 are minimised, which may lead to an improvement in motor efficiency.

Alternatively, however, these components may comprise different magnetic materials. The normal components of the magnetic field may be continuous through the interfaces formed by the housing 1223, the magnetic bearing elements 1230, and the poles of the rotor 1210-1 -1210-4, even when these components comprise different magnetic materials.

Therefore, the magnetic field lines 1222-1 - 1222-4 may still form a closed loop as long as a path of least magnetic reluctance is clearly defined from the housing 1223 to the poles of the rotor 1210-1 -1210-4 via the magnetic bearing elements 1230 while the rotor 1210 and the magnetic bearing elements 1230 are rotating.

In order for the path of least magnetic reluctance to be clearly defined, the non-magnetic bearing elements 1240 may be arranged to form regions of high magnetic reluctance and the relative permeabilities of the magnetic bearing elements may be chosen to be as high as possible. The composition and the material choices for the magnetic materials and the non-magnetic materials are discussed above.

Figure 12a may represent a snapshot of the operation of the motor 1200, in which the motor is operational and the rotor 1210 is spinning around its axis O inside the housing 1223 of the stator 1220. In this case, at the moment of the snapshot of Figure 12a, only the topmost and bottommost electromagnets 1221-1, 1221-4 of the stator 1220 are powered-on. These two electromagnets 1221-1, 1221-4 are located directly opposite each other. The other four electromagnets 1221-2, 1221-3, 1221-5, 1221-6, which are located in between the topmost and bottommost electromagnets 1221-1, 1221-4 around the outside of the rotor housing 1223, are switched off.

The magnetic field lines 1222-1 - 1222-4 for this moment of snapshot are shown in Figure 12a. The magnetic field lines 1222-1 - 1222-4 are in the form of a loop which passes through the stator 1220, the magnetic bearing elements 1230 and the first region 12101 of the rotor 1210. The magnetic field lines 1222-1 - 1222-4 represent the direction of the magnetic field at a given spatial position of the motor 1200. In Figure 12a, for clarity of illustration, only four such field lines are shown. However, it will be appreciated that the illustrated field lines represent the magnetic field as whole and do not necessarily imply any particular strength in the field.

Figure 12a shows that the magnetic field lines 1222-1 - 1222-4 are substantially continuous across the rotor 1210 and the housing 1223 of the stator 1220, via the magnetic bearing elements 1230 located in the gap 1224 between the rotor 1210 and the stator 1220. This continuity is facilitated by providing a path of least magnetic reluctance between the housing 1223 of the stator 1220 and the poles of the rotor 1210. In particular, with reference to the field lines adjacent to the topmost electromagnet 1221-1 shown in Figure 12a, it can be seen that the field lines extend continuously from the region of the housing 1223 directly adjacent to the topmost electromagnet 121-1 into a plurality of individual magnetic bearing elements 1230 located in the gap 1224 between the housing 1223 and the rotor 1210. These plurality of magnetic bearing elements 1230 are preferably in physical contact with the region of the housing 1223 referred to above, so that any discontinuity caused by intermediate air that would otherwise be present in the gap 1224 is prevented.

It can be seen from Figure 12a that the field lines then continue from the plurality of magnetic bearing elements 1230 into a pole 1210-1 of the rotor 1210 on the opposite side of the gap 1224. As before, the plurality of magnetic bearing elements 1230 are preferably in physical contact with the pole 1210-1 of the rotor 1210. In other words, the magnetic bearing elements 1230 may entirely traverse the gap 1224 between the stator housing 1223 and the rotor 1210.

A corresponding behaviour of the magnetic field lines 1222-1 - 1222-4 is evident in the region of the motor 1200 adjacent to the bottommost electromagnet 1221-4, which as outlined above is also powered-on at the moment of the snapshot of Figure 12a. It can be seen from Figure 12a that the field lines pass directly and continuously from the region of the stator housing 1223 adjacent to the bottommost electromagnet 1221-4 into a plurality of magnetic bearing elements 1230 located in the gap 1224. The field lines then pass continuously from these magnetic bearing elements 1230 directly into a pole 1210-3 of the rotor 1210 located opposite the bottommost electromagnet 121-4, across the gap 1224, in a corresponding fashion to the field lines illustrated in the region of the topmost electromagnet 1221-1.

In between the two opposite poles 1210-1, 1210-3 of the rotor 1210 referred to in the description above, the magnetic field lines 1222-1 - 1222-4 extend through the first region 12101 of the rotor 1210, which is formed of one or more magnetic materials. For example, as shown in Figure 12a, the magnetic field lines 1222-1 - 1222-4 may pass substantially around an outer circumferential region of the rotor 1210 between the two opposite poles 1210-1, 1210-3. In between the two electromagnets 1221-1, 1221-4, the magnetic field may extend circumferentially through an inner frame 1225.

The magnitudes of the magnetic permeabilities of the rotor poles 1210-1- 1210-4, the stator housing 1223 and the magnetic bearing elements 1230 may be the substantially the same, or when chosen differently, chosen such that the path of least magnetic reluctance is clearly defined from the housing 1223 to the poles of the rotor 1210-1 and 1210-3 via the magnetic bearing elements 1230 and such that the magnetic field lines 1222-1 - 1222-4 may be formed as described above.

Referring again to Figure 12a, without the presence of the magnetic bearing elements 1230 in the gap 1224 between the stator 1220 and the rotor 1210, the air gap between the rotor 1210 and the stator 1220 may cause a significant decrease in the strength of the magnetic field at the positions of the poles 1210-1, 1210-3 of the rotor 1210. Such a decrease in the strength of the magnetic field at these locations would, to a significant extent, be due to the large discontinuity of magnetic permeabilities between the stator housing 1223, the air gap and the rotor 1210. Particular discontinuities would be present at the interface of the stator housing 1223 and the air gap, and at the interface between the air gap and the poles 1210-1, 1210-3 of the rotor 110. If these discontinuities are such that the path of least magnetic reluctance does not form to traverse the interfaces, all or part of the magnetic field lines 1221-1 - 1221-4 may run along the circumferential direction of the gap 1224, and the magnetic field lines 1222-1 - 1222-4 may not be formed as described above. The field strength at the location of the poles of the rotor 1210 and the operation of the electric motor 1200 may be consequently compromised. Since the efficiency of the electric motor 1200 is closely related to the field strength at the location of the poles of the rotor 1210, the size of any air gap may negatively affect the electrical current requirements of the electromagnets 1221, the power factor of the motor and even the price of maintenance of the motor due to increased wear.

In the case that the magnetic permeabilities of the stator housing 1223, the magnetic bearing elements 1230 and the poles of the rotor 1210-1- 1210-4, are the same, the presence of the magnetic bearing elements 1230 in the gap 1224 between the rotor 1210 and the stator housing 1223 ensures that a path of least magnetic reluctance is formed across the rotor 1210 and the stator 1220 such that the magnetic field lines are concentrated along that path of least magnetic reluctance. In effect, the presence of the magnetic bearing elements 1230 eliminates the gap 1224 between the rotor 1210 and the stator 1220.

Similarly, in the case that the magnetic permeabilities of the stator housing 1223, the magnetic bearing elements 1230 and the poles of the rotor 1210-1- 1210-4 are not identical, if relative permeabilities of the magnetic bearing elements 1230 are large enough, a path of least magnetic reluctance may be formed to run across the gap 1224 between the rotor 1210 and the stator housing 1223, as discussed above. This has a similar effect to the case where the permeabilities of the components are identical in that magnetic reluctance due to the gap 1224 is reduced.

It will be appreciated from the above discussion that the motor 1200 described herein may provide advantages in terms of improved efficiency when compared to conventional electrical motors with air gaps between the stator and the rotor, as discussed above for the electric motors shown in Figures 1 to 10.

In Figure 12a, respective ones of the non-magnetic bearing elements 1240 are disposed between respective ones of the magnetic bearing elements 1230 in the gap 1224 between the rotor 1210 and the stator 1220. In other words, the magnetic bearing elements 1230 and the non-magnetic bearing elements 1240 are disposed to alternate one by one along the circumference of the gap 1224. The bearing elements 1230 and 1240 in the gap may be arranged in the gap such that they do not touch each other. This specific arrangement of bearing elements 1230, 1240 may enable the magnetic field lines 1222-1 - 1222-4 to be locally confined within respective ones of the magnetic bearing elements 1230 to run across the gap 1224 rather than run along the circumference of the gap 1224, while ensuring that the effective area of the magnetic bearing elements 1230 between the electromagnets 1221 that are powered-on and the adjacent poles 1210-1 - 1210-4 of the rotor 1210 is substantially large such that the magnetic flux from the stator housing 1223 to the rotor 1210 may be kept large enough for operation of the motor 1210.

For example, as discussed above, in Figure 12a, only the topmost and bottommost electromagnets 1221-1 and 1221-4 are powered-on. As depicted by the illustrated magnetic field lines 1222-1 - 1222-4, the magnetic field lines in the gap 1224 between the rotor 1210 and the stator housing 1223 are confined around the two powered-on electromagnets 1221-1, 1221-4 and the respectively opposite poles 1210-1, 1210-3 of the rotor 1210.

If the gap 1224 between the rotor 1210 and the stator 1220 were packed only with magnetic bearing elements 1230, it is possible, in some arrangements, that the magnetic field lines 1222-1 - 1222-4 would be able to penetrate away from these regions of the motor 1200 by travelling around the circumference of the gap 1224. This is because the path of least magnetic reluctance may be formed along the circumferential direction of the gap 1224. For example, the magnetic field lines 1222-1 - 1222-4 may be able to propagate through adjacent ones of the plurality of magnetic bearing elements 1230 if the individual elements 1230 touch each other. Therefore, in case the gap 1224 is packed only with magnetic bearing elements 1230, the magnetic bearing elements 1230 may be arranged such that they do not contact each other within the gap 1224.

The arrangements shown in Figure 1c and id may also apply to the electric motor 1200 in which the rotor 1210 is external to the stator 1220.

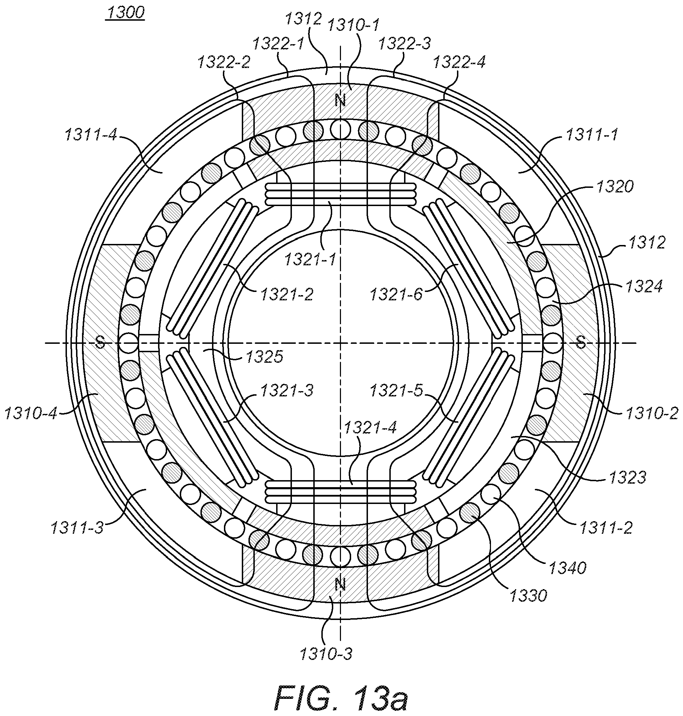

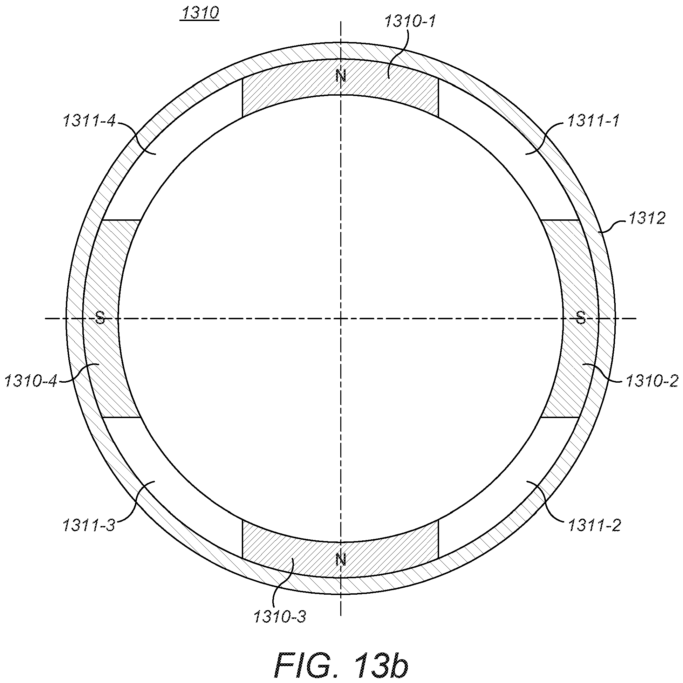

Figure 13a is a schematic cross-sectional view of a twelfth exemplary embodiment of an electric motor 1300. Figure 13b is a schematic cross-sectional view of the rotor 1310 of the motor shown in Fig. 13a. The electric motor 1300 shown in Figure 13a is identical to the electric motor 1200 shown in Figure 12a, except that the rotor 1310, also shown in Figure 13b, comprises four permanent magnets 1312-1 - 1312-4 as replacements for the poles of magnetic material 1210-1 - 1210-4 in the rotor 1210 shown in Figure 12b.

The rotor 1310 comprises a first region 13101 and a second region 13102. The first region 13101 of the rotor 1310 comprises a plurality of permanent magnets 1310-1, 1310-2, 1310-3, 1310-4 and an outer rim 1312. The second region 13102 of the rotor 1310 may comprise a plurality of non-magnetic portions 1311-1, 1311-2, 1311-3, 1311-4, which may be located between the plurality of poles 1310-1 - 1310-4 in the first region 13101. These non-magnetic portions 1311-1 - 1311-4 of the second region of the rotor 1310 are referred to below as filling portions 1311-1 - 1311-4.

The permanent magnets 1310-1 - 1310-4 of the rotor 1310 may each be in the form close to a sector of the first region 13101 of the rotor 1301, which may be in the shape of hollow cylinder, an annulus, or a tube. Analogous to the rotor 1210 shown in Figure 12b, the permanent magnets 1310-1 - 1310-4 are disposed around an internal surface of the rotor 1210 which faces the stator 1220.

For example, the rotor 1310 shown in Figures 13a and 13b comprises a first region 13101 in which four permanent magnets 1310-1 - 1310-4 are approximately equally spaced around the circumference of the rotor 1310. In between the permanent magnets, the first region 13101 comprises a plurality of recesses where the depth of the first region 13101 of the rotor 1310 is less than the radial extent of each permanent magnet. These recesses of the first region 13101 are occupied by the portions of the second region 13102 of the rotor 1310 referred to above. In particular, the recesses of the first region 13101 are filled by a plurality of filling portions 1311-1 - 1311-4 of the rotor 1310.
As shown in Figures 13a and 13b, the filling portions 1311-1 - 1311-4 may be arranged to fill the recesses between the poles 1310-1 to 1310-4 such that the internal surface of the rotor 1310 is shaped as a smooth cylindrical surface. As outlined above, overall, the rotor 1310 may be in the form of a hollow cylinder, although the shape of the rotor is not limited to this example, as long as the internal surface of the rotor 1310 is shaped as a smooth cylindrical surface. The filling portions 1211-1 - 1211-4 comprise non-magnetic materials.

At the moment of the snapshot of Figure 13a, only the topmost and the bottommost electromagnets 1321-1 and 1321-4 are powered-on. The principle of operation may be similar to the electric motor 1300 as shown in Figure 13a.

The configuration of the electric motor 1300 shown in Figure 13a illustrates that the concept of disposing a mixture of magnetic bearing elements 1330 and non-magnetic bearing elements 1340 in the gap 1324 between the rotor 1310 and the stator 1320 may not depend on the specific design of the rotor 1310 in the electric motor and may be applied to various types of electric motors to improve the performance. The mixture of magnetic bearing elements 1330 and non-magnetic bearing elements 1340 disposed in the gap 1324 between the rotor 1310 and the stator 1320 may assist in reducing the magnetic reluctance between the rotor 1310 and the stator 1320, therefore in forming the magnetic field lines 1322-1 - 1322-4 as described above, while at the same time serving as a mechanical bearing which provides mechanical stability of operation in the motor 1300.

In particular, the specific arrangement where the magnetic bearing elements 1230, 1330 and the non-magnetic bearing elements 1240, 1340 alternate one by one as shown in Figure 12a and Figure 13a may be applied to a wide range of types of electric motors for the reasons discussed above. Other arrangements of the magnetic bearing elements 1230, 1330 and the non-magnetic bearing elements 1240, 1340 may also be possible if the specific geometry of the rotor 1210, 1310 and the stator 1220, 1320 are considered.

For example, the gap 1224, 1324 may be packed only with magnetic bearing elements 1230, 1330, as shown in Figure 3, or two respective ones of magnetic bearing elements 1230, 1330 alternating with one of the respective ones of the non-magnetic bearing elements 1240, 1340, as shown in Figures 4, 5 and 6, or three respective ones of magnetic bearing elements 1230, 1330 alternating with three of the respective ones of the non-magnetic bearing elements 1240, 1340, as shown in Figures 7, 8, 9 and 10. However, the arrangements are not limited to these examples.

As long as a path of least magnetic reluctance can be clearly defined from the housing, 1223, 1323 to the poles of the rotor 1210, 1310 via the magnetic bearing elements 1230, 1330, at appropriate moments of operation such that the magnetic field lines 1222-1 - 1222-4,1322-1 - 1322-4 similar to the ones shown in Figures 12a, 13a may be formed, any suitable combinations of the magnetic bearing elements 1230, 1330 and non-magnetic bearing elements 1240, 1340 may be adopted depending on the design of each electric motor 1200, 1300.

Also, as long as a similar principle is satisfied, other components such as the design of the rotor 1210, 1310 is not limited to those disclosed above and in the Figures 12b and 13b.

The embodiments of the invention shown in the drawings and described above are exemplary embodiments only and are not intended to limit the scope of the invention, which is defined by the claims hereafter. It is intended that any combination of non-mutually exclusive features described herein are within the scope of the present invention.

## Claims

1. An electric motor (100, 200, 400, 500, 600, 700, 800, 900, 1000, 1200, 1300), comprising:
a rotor (110, 210, 410, 510, 610, 710, 810, 910, 1010, 1210, 1310);
a stator (120, 220, 420, 520, 620, 720, 820, 920, 1020, 1220, 1320);
a gap (124, 224, 424, 524, 624, 724, 824, 924, 1024, 1224, 1324) between the rotor and the stator;
a first group (130, 230, 430, 530, 630, 730, 830, 930, 1030, 1230, 1330) of rollable elements located in the gap comprising a magnetic material; **characterised in that** it further comprises at least one of:
a plurality of spacers (128) comprising a non-magnetic material,
wherein respective ones of the plurality of spacers are disposed between respective groups comprising a predetermined number of respective ones of the first group of rollable elements; or
a second group (140, 240, 440, 540, 640, 740, 840, 940, 1040, 1240, 1340) of the rollable elements comprising a non-magnetic material.

2. An electric motor according to claim 1,
wherein the stator comprises a housing (123, 223, 423, 523, 623, 723, 823, 923, 1023) and a plurality of electromagnets, the housing comprising a magnetic material and a cylindrical internal surface,
wherein the rotor comprises a plurality of poles and comprises an external surface formed as the curved surface of a circular cylinder, the rotor disposed within the cylindrical internal surface of the stator such that central axes of the cylindrical internal surface and the external surface of the rotor are parallel and coaxial, and such that the gap is formed between the external surface of the rotor and the cylindrical internal surface of the stator,
optionally wherein the first group of rollable elements are disposed in the gap and arranged to be in mechanical contact with both the external surface of the rotor and the cylindrical internal surface of the stator.

3. An electric motor according to claim 1,
wherein the stator comprises a housing (1223, 1323) and a plurality of electromagnets, the housing comprising a magnetic material and a cylindrical external surface,
wherein the rotor comprises a plurality of poles and comprises an internal surface formed as the curved surface of a circular cylinder, the rotor disposed outside the cylindrical external surface of the stator such that central axes of the cylindrical internal surface and the external surface of the stator are parallel and coaxial, and such that the gap is formed between the internal surface of the rotor and the cylindrical external surface of the stator,
optionally wherein the first group of rollable elements are disposed in the gap and arranged to be in mechanical contact with both the internal surface of the rotor and the cylindrical external surface of the stator.

4. An electric motor according to claims 2 to 3,
wherein the rotor and the first group of rollable elements are configured to rotate in response to magnetic fields generated by one or more of the electromagnets.

5. An electric motor according to claims 2 to 4,
wherein when at least one of the electromagnets is powered and aligned with one of the plurality of poles of the rotor, magnetic field lines are closed from the one of the electromagnets to the one of the plurality of poles via at least one of the respective ones of the first group of rollable elements.

6. An electric motor according to any preceding claim,
wherein the gap is arranged such that the first group of rollable elements form a single row around the circumference of the gap.

7. An electric motor according to any preceding claim, wherein one or more groups comprising a first number of the respective ones of the first group of the rollable elements are disposed in the gap to alternate with one or more groups comprising a second number of the respective ones of the second group of the rollable elements.

8. An electric motor according to any preceding claim,
wherein the plurality of poles comprise one or more magnetic materials disposed periodically around the external surface and arranged to protrude radially outward.

9. An electric motor according to any one of the claims 1 to 7,
wherein the plurality of poles comprise permanent magnets such that the polarity of respective ones of the plurality of poles are opposite to that of the neighbouring pole.

10. An electric motor according to claim 8 or 9,
wherein the rotor further comprises a plurality of filling portions, the plurality of filling portions comprising non-magnetic materials and disposed between the plurality of poles of the rotor such that the external surface of the rotor is in a cylindrical shape.

11. An electric motor according to any preceding claim,
wherein the rotor is in annular shape such that the internal surface of the rotor is in a cylindrical shape disposed concentrically with the external surface of the rotor.

12. An electric motor according to any preceding claim,
wherein the plurality of rollable elements comprise one or more of ball bearings, roller bearings, and conical rollers.

13. An electric motor according to any preceding claim, wherein:
the first group of rollable elements is arranged in the gap such that when the rotor is rotated by one motor step angle, the arrangement of the first group of rollable elements with respect to the rotor and the stator is the same as the arrangement before the rotation of the rotor; or
the first group of rollable elements is arranged in the gap such that when the rotor is rotated by one motor step angle, the arrangement of the first group of rollable elements with respect to the rotor and the stator is different from the arrangement before the rotation of the rotor.

14. An electric motor according to any preceding claim,
wherein the electric motor further comprises:
a shaft; and
one or more of shaft support bearings,
wherein the rotor is mounted on the shaft, and the one or more of shaft support bearings are configured to support the shaft.

15. An electric motor according to any preceding claim, wherein the predetermined number is one.

## Patentansprüche

1. Elektromotor (100, 200, 400, 500, 600, 700, 800, 900, 1000, 1200, 1300), umfassend:
einen Rotor (110, 210, 410, 510, 610, 710, 810, 910, 1010, 1210, 1310);
einen Stator (120, 220, 420, 520, 620, 720, 820, 920, 1020, 1220, 1320);
einen Spalt (124, 224, 424, 524, 624, 724, 824, 924, 1024, 1224, 1324) zwischen dem Rotor und dem Stator;
eine erste Gruppe (130, 230, 430, 530, 630, 730, 830, 930, 1030, 1230, 1330) von rollbaren Elementen, die sich in dem Spalt befinden und ein magnetisches Material umfassen; **dadurch gekennzeichnet, dass** sie ferner umfasst mindestens eines von:
eine Vielzahl von Abstandshaltern (128), die ein nichtmagnetisches Material umfassen, wobei jeweilige der Vielzahl von Abstandshaltern zwischen jeweiligen Gruppen angeordnet sind, die eine vorbestimmte Anzahl von jeweiligen der ersten Gruppe von rollbaren Elementen umfassen; oder
eine zweite Gruppe (140, 240, 440, 540, 640, 740, 840, 940, 1040, 1240, 1340) der rollbaren Elemente, die ein nichtmagnetisches Material umfassen.

2. Elektromotor gemäß Anspruch 1,
wobei der Stator ein Gehäuse (123, 223, 423, 523, 623, 723, 823, 923, 1023) und eine Vielzahl von Elektromagneten umfasst, wobei das Gehäuse ein magnetisches Material und eine zylindrische Innenfläche umfasst,
wobei der Rotor eine Vielzahl von Polen umfasst und eine Außenfläche aufweist, die als gekrümmte Fläche eines kreisförmigen Zylinders ausgebildet ist, wobei der Rotor innerhalb der zylindrischen Innenfläche des Stators so angeordnet ist, dass Mittelachsen der zylindrischen Innenfläche und die Außenfläche des Rotors parallel und koaxial sind, und so, dass der Spalt zwischen der Außenfläche des Rotors und der zylindrischen Innenfläche des Stators ausgebildet ist,
gegebenenfalls, wobei die erste Gruppe von rollbaren Elementen in dem Spalt angeordnet und so angeordnet ist,
dass sie in mechanischem Kontakt sowohl mit der Außenfläche des Rotors als auch mit der zylindrischen Innenfläche des Stators ist.

3. Elektromotor gemäß Anspruch 1,
wobei der Stator ein Gehäuse (1223, 1323) und eine Vielzahl von Elektromagneten umfasst, wobei das Gehäuse ein magnetisches Material und eine zylindrische Außenfläche umfasst,
wobei der Rotor eine Vielzahl von Polen umfasst und eine Innenfläche aufweist, die als gekrümmte Fläche eines kreisförmigen Zylinders ausgebildet ist, wobei der Rotor außerhalb der zylindrischen Außenfläche des Stators so angeordnet ist, dass die Mittelachsen der zylindrischen Innenfläche und der Außenfläche des Stators parallel und koaxial sind, und so, dass der Spalt zwischen der Innenfläche des Rotors und der zylindrischen Außenfläche des Stators ausgebildet ist,
gegebenenfalls, wobei die erste Gruppe von rollbaren Elementen in dem Spalt angeordnet und so angeordnet ist,
dass sie in mechanischem Kontakt sowohl mit der Innenfläche des Rotors als auch mit der zylindrischen Außenfläche des Stators ist.

4. Elektromotor gemäß den Ansprüchen 2 bis 3,
wobei der Rotor und die erste Gruppe von rollbaren Elementen dazu ausgelegt sind, sich in Reaktion auf Magnetfelder zu drehen, die durch einen oder mehrere der Elektromagneten erzeugt werden.

5. Elektromotor gemäß den Ansprüchen 2 bis 4,
wobei, wenn mindestens einer der Elektromagneten mit Strom versorgt wird und mit einem der Vielzahl von Polen des Rotors ausgerichtet ist, Magnetfeldlinien aus dem einen der Elektromagnete zu dem einen der Vielzahl von Polen über mindestens eines der jeweiligen der ersten Gruppe von rollbaren Elementen geschlossen werden.

6. Elektromotor gemäß einem vorhergehenden Anspruch, wobei der Spalt so angeordnet ist, dass die erste Gruppe von rollbaren Elementen eine einzelne Reihe um den Umfang des Spalts bildet.

7. Elektromotor gemäß einem vorhergehenden Anspruch, wobei eine oder mehrere Gruppen, die eine erste Anzahl der jeweiligen Elemente der ersten Gruppe von rollbaren Elementen umfassen, in dem Spalt angeordnet sind, um sich mit einer oder mehreren Gruppen abzuwechseln, die eine zweite Anzahl der jeweiligen Elemente der zweiten Gruppe der rollbaren Elemente umfassen.

8. Elektromotor gemäß einem vorhergehenden Anspruch, wobei die Vielzahl von Polen ein oder mehrere magnetische Materialien umfasst, die regelmäßig um die Außenfläche herum angeordnet und so angeordnet sind, dass sie radial nach außen ragen.

9. Elektromotor gemäß einem der Ansprüche 1 bis 7, wobei die Vielzahl von Polen Permanentmagnete umfassen, sodass die Polarität der jeweiligen der Vielzahl von Polen entgegengesetzt zu der des benachbarten Pols ist.

10. Elektromotor gemäß Anspruch 8 oder 9,
wobei der Rotor ferner eine Vielzahl von Füllabschnitten umfasst, wobei die Vielzahl von Füllabschnitten nichtmagnetische Materialien umfasst und zwischen der Vielzahl von Polen des Rotors angeordnet ist, sodass die Außenfläche des Rotors eine zylindrische Form aufweist.

11. Elektromotor gemäß einem vorhergehenden Anspruch, wobei der Rotor ringförmig ist, sodass die Innenfläche des Rotors eine zylindrische Form aufweist, die konzentrisch mit der Außenfläche des Rotors angeordnet ist.

12. Elektromotor gemäß einem vorhergehenden Anspruch, wobei die Vielzahl von rollbaren Elementen eines oder mehreres von Kugellagern, Rollenlagern und konischen Rollen umfasst.

13. Elektromotor gemäß einem vorhergehenden Anspruch, wobei:
die erste Gruppe von rollbaren Elementen in dem Spalt so angeordnet ist, dass, wenn der Rotor um einen Motorschrittwinkel gedreht wird, die Anordnung der ersten Gruppe von rollbaren Elementen in Bezug auf den Rotor und den Stator gleich wie die Anordnung vor der Drehung des Rotors ist; oder
die erste Gruppe von rollbaren Elementen in dem Spalt so angeordnet ist, dass, wenn der Rotor um einen Motorschrittwinkel gedreht wird, die Anordnung der ersten Gruppe von rollbaren Elementen in Bezug auf den Rotor und den Stator von der Anordnung vor der Drehung des Rotors verschieden ist.

14. Elektromotor gemäß einem vorhergehenden Anspruch, wobei der Elektromotor ferner umfasst:
eine Welle; und
ein oder mehrere Wellenstützlager,
wobei der Rotor auf der Welle montiert ist und das eine oder die mehreren Wellenstützlager dazu ausgelegt sind, die Welle zu stützen.

15. Elektromotor gemäß einem vorhergehenden Anspruch, wobei die vorbestimmte Anzahl eins beträgt.

## Revendications

1. Moteur électrique (100, 200, 400, 500, 600, 700, 800, 900, 1000, 1200, 1300), comprend :
un rotor (110, 210, 410, 510, 610, 710, 810, 910, 1010, 1210, 1310) ;
un stator (120, 220, 420, 520, 620, 720, 820, 920, 1020, 1220, 1320) ;
un entrefer (124, 224, 424, 524, 624, 724, 824, 924, 1024, 1224, 1324) entre le rotor et le stator ;
un premier groupe (130, 230, 430, 530, 630, 730, 830, 930, 1030, 1230, 1330) d'éléments roulants situés dans l'entrefer comprenant un matériau magnétique ;
**caractérisé en ce qu'**il comprend en outre
une pluralité d'espaceurs (128) comprenant un matériau non magnétique, des espaceurs respectifs de la pluralité d'espaceurs étant placés entre des groupes respectifs comprenant un nombre prédéterminé d'éléments roulants respectifs du premier groupe d'éléments roulants ; et/ou un deuxième groupe (140, 240, 440, 540, 640, 740, 840, 940, 1040, 1240, 1340) des éléments roulants comprenant un matériau non magnétique.

2. Moteur électrique selon la revendication 1,
dans lequel le stator comprend un boîtier (123, 223, 423, 523, 623, 723, 823, 923, 1023) et une pluralité d'électroaimants, le boîtier comprenant un matériau magnétique et une surface interne cylindrique,
dans lequel le rotor comprend une pluralité de pôles et comprend une surface externe prenant la forme de la surface incurvée d'un cylindre circulaire, le rotor étant placé à l'intérieur de la surface interne cylindrique du stator de telle sorte que des axes centraux de la surface interne cylindrique et de la surface externe du rotor soient parallèles et coaxiaux, et de telle sorte que l'entrefer soit ménagé entre la surface externe du rotor et la surface interne cylindrique du stator, éventuellement dans lequel le premier groupe d'éléments roulants sont placés dans l'entrefer et agencés de manière à être au contact mécanique à la fois de la surface externe du rotor et de la surface interne cylindrique du stator.

3. Moteur électrique selon la revendication 1,
dans lequel le stator comprend un boîtier (1223, 1323) et une pluralité d'électroaimants, le boîtier comprenant un matériau magnétique et une surface externe cylindrique, dans lequel le rotor comprend une pluralité de pôles et comprend une surface interne prenant la forme de la surface incurvée d'un cylindre circulaire, le rotor étant placé à l'extérieur de la surface externe cylindrique du stator de telle sorte que des axes centraux de la surface interne cylindrique et de la surface externe du stator soient parallèles et coaxiaux, et de telle sorte que l'entrefer soit ménagé entre la surface interne du rotor et la surface externe cylindrique du stator, éventuellement dans lequel le premier groupe d'éléments roulants sont placés dans l'entrefer et agencés de manière à être au contact mécanique à la fois de la surface interne du rotor et de la surface externe cylindrique du stator.

4. Moteur électrique selon les revendications 2 à 3, dans lequel le rotor et le premier groupe d'éléments roulants sont configurés pour effectuer une rotation en réponse à des champs magnétiques générés par un ou plusieurs des électroaimants.

5. Moteur électrique selon les revendications 2 à 4, dans lequel, lorsqu'au moins un des électroaimants est alimenté et aligné avec l'un de la pluralité de pôles du rotor, des lignes de champ magnétique sont fermées entre ledit un des électroaimants et ledit un de la pluralité de pôles par le biais d'au moins un des éléments roulants respectifs du premier groupe d'éléments roulants.

6. Moteur électrique selon l'une quelconque des revendications précédentes,
dans lequel l'entrefer est agencé de telle sorte que le premier groupe d'éléments roulants forment une seule rangée autour de la circonférence de l'entrefer.

7. Moteur électrique selon l'une quelconque des revendications précédentes, dans lequel un ou plusieurs groupes comprenant un premier nombre des éléments roulants respectifs du premier groupe des éléments roulants sont placés dans l'entrefer en alternance avec un ou plusieurs groupes comprenant un deuxième nombre d'éléments roulants respectifs du deuxième groupe des éléments roulants.

8. Moteur électrique selon l'une quelconque des revendications précédentes,
dans lequel la pluralité de pôles comprennent un ou plusieurs matériaux magnétiques placés périodiquement autour de la surface externe et agencés de manière à faire saillie radialement vers l'extérieur.

9. Moteur électrique selon l'une quelconque des revendications 1 à 7,
dans lequel la pluralité de pôles comprennent des aimants permanents de telle sorte que la polarité de pôles respectifs de la pluralité de pôles soit opposée à celle du pôle voisin.

10. Moteur électrique selon la revendication 8 ou 9, dans lequel le rotor comprend en outre une pluralité de parties de remplissage, la pluralité de parties de remplissage comprenant des matériaux non magnétiques et étant placées entre la pluralité de pôles du rotor de telle sorte que la surface externe du rotor prenne une forme cylindrique.

11. Moteur électrique selon l'une quelconque des revendications précédentes,
dans lequel le rotor prend une forme annulaire de telle sorte que la surface interne du rotor prenne une forme cylindrique placée concentriquement avec la surface externe du rotor.

12. Moteur électrique selon l'une quelconque des revendications précédentes,
dans lequel la pluralité d'éléments roulants comprennent des roulements à billes et/ou des roulements à rouleaux et/ou des rouleaux coniques.

13. Moteur électrique selon l'une quelconque des revendications précédentes, dans lequel :
le premier groupe d'éléments roulants est agencé dans l'entrefer de telle sorte que, lorsque le rotor effectue une rotation d'un angle de pas de moteur, l'agencement du premier groupe d'éléments roulants par rapport au rotor et au stator soit identique à l'agencement avant la rotation du rotor ; ou
le premier groupe d'éléments roulants est agencé dans l'entrefer de telle sorte que, lorsque le rotor effectue une rotation d'un angle de pas de moteur, l'agencement du premier groupe d'éléments roulants par rapport au rotor et au stator soit différent l'agencement avant la rotation du rotor.

14. Moteur électrique selon l'une quelconque des revendications précédentes,
lequel moteur électrique comprend en outre :
un arbre ; et
un ou plusieurs paliers d'appui d'arbre,
le rotor étant monté sur l'arbre et les un ou plusieurs paliers d'appui d'arbre étant configurés pour servir d'appui à l'arbre.

15. Moteur électrique selon l'une quelconque des revendications précédentes, dans lequel le nombre prédéterminé vaut un.
